(19) Europäisches Patentamt
European Patent Office
Office européen des brevets

(11) **EP 2 719 283 B1**

(12) **EUROPEAN PATENT SPECIFICATION**

(45) Date of publication and mention
of the grant of the patent:
**01.03.2017 Bulletin 2017/09**

(21) Application number: **12796546.5**

(22) Date of filing: **05.06.2012**

(51) Int Cl.:
*A21D 13/00* (2017.01)    *A21D 2/18* (2006.01)
*A21D 8/04* (2006.01)    *A21D 15/00* (2006.01)
*A21D 13/06* (2017.01)

(86) International application number:
**PCT/JP2012/064435**

(87) International publication number:
**WO 2012/169486 (13.12.2012 Gazette 2012/50)**

(54) **BREADS HAVING NOVEL PHYSICAL PROPERTIES AND METHOD FOR PRODUCING SAME**

BROTE MIT NEUEN PHYSIKALISCHEN EIGENSCHAFTEN UND VERFAHREN ZU IHRER HERSTELLUNG

PAINS AYANT DE NOUVELLES PROPRIÉTÉS PHYSIQUES ET PROCÉDÉ POUR LEUR PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2011 JP 2011128633**

(43) Date of publication of application:
**16.04.2014 Bulletin 2014/16**

(73) Proprietor: **En Otsuka Pharmaceutical Co., Ltd. Hanamaki-shi, Iwate 025-0312 (JP)**

(72) Inventors:
• **EBATA, Miharu**
 **Hanamaki-shi**
 **Iwate 025-0312 (JP)**
• **OOMIZU, Eri**
 **Hanamaki-shi**
 **Iwate 025-0312 (JP)**

(74) Representative: **Forstmeyer, Dietmar et al**
**BOETERS & LIECK**
**Oberanger 32**
**80331 München (DE)**

(56) References cited:
**WO-A1-2005/077194    WO-A1-2008/142853**
**WO-A1-2009/044538    JP-A- 9 322 857**
**JP-A- 2002 291 396    JP-A- 2006 304 692**
**JP-A- 2006 304 693    JP-A- 2007 521 839**
**JP-A- 2008 029 208    JP-A- 2010 161 998**
**JP-A- 2010 207 128**

• **DATABASE WPI Week 199954 Thomson Scientific, London, GB; AN 1999-626897 XP002731106, -& JP H11 276081 A (INA SHOKUHIN KOGYO KK) 12 October 1999 (1999-10-12)**

EP 2 719 283 B1

**Description**

TECHNICAL FIELD

The present invention relates to a method of producing a rebaked bread having the following physical properties of 1) to 3) and a structure easily crushable by the tongue and the upper jaw:

1) hardness, cohesiveness, and a syneresis rate on the same level with normal bread;
2) adhesiveness equal to or less than 50 J/m$^3$; and
3) adhesiveness of bakery products moistened by saliva (adhesiveness at the time of contact with saliva in the oral cavity) and/or adhesiveness of the bolus at swallow initiation (adhesiveness at the start of swallowing) lower than normal bread.

BACKGROUND ART

Breads such as white bread, pastries, and steamed bread are eaten by wider generations as easily eatable food and the number of people preferring breads to rice as staple food is increasing.

Therefore, quality modifiers and the like containing thickening polysaccharide such as xanthan gum and guar gum and an alginate for making confectionery and bread have been developed to acquire breads having more preferable texture, meltability in the mouth, volume, etc., (see, e.g., Patent Documents 1 to 3).

The number of people preferring breads is increasing among people having impaired chewing or swallowing functions such as aged people. A person without sufficiently working chewing or swallowing functions such as a person during illness or recovering from illness, a person with an aftereffect after illness, and an infant in the weaning period may also desire to eat breads.

However, chewing bread causes tissues and structure forming bread to cohere and form a solid lump having tendency to adhere to the inside the oral cavity and the throat. Breads tend to draw moisture in the oral cavity and therefore have a problem that makes it difficult to chew or swallow.

Therefore, breads are conventionally torn into small pieces and served as bread porridge boiled in milk or soup for people having impaired chewing or swallowing functions such as aged people. However, although made of breads, bread porridge is porridge-like and completely different from normal bread in terms of appearance, texture, flavor, etc., and therefore has a problem that satisfaction of eating breads cannot sufficiently be acquired.

To solve such problems, various bread-like foods facilitating chewing or swallowing have recently been developed.

For example, in Patent Document 4, by immersing a bread-like food with water etc., a food is acquired that retains appearance as bread and that is easy to chew or swallow even for a person having impaired chewing or swallowing functions.

The food acquired in this way has hardness of $5 \times 10^4$ N/m$^2$ or less and can be considered as a food easy to chew or swallow even for an aged person etc. However, since this food contains a large amount of liquid such as water, the liquid seeps out into the oral cavity, resulting in texture, flavor, etc., completely different from breads. When this food is eaten, the liquid contained in this food seeps out into the oral cavity and mixes with a food in a solid form, resulting in a risk of accidental swallowing.

In Patent Document 5, by adding milk and sugar to raw bread crumbs, heating the raw bread crumbs, adding thickening polysaccharide, and cooling the mixture, a bread-like food in a predetermined shape is acquired.

This bread-like food is favorable as a swallowing food crushable solely by the pressure of the tongue. However, this bread-like food is completely different from normal bread in terms of all of appearance, texture, flavor, etc., and does not give the satisfaction of eating normal bread.

For food acquired by improving the breads itself, in Patent Document 6, bread dough containing a gel composition is baked such that specific volume becomes lager than conventional bread so as to acquire crisp bread having a soft physical property. In Patent Document 7, bread dough containing certain amounts of grain flour, sugar, oils and fats, phospholipid, etc., is baked to achieve a certain water content so as to acquire breads with good crispness and lower adhesiveness at the time of chewing.

All these breads have the same appearance, texture, flavor, etc., as conventional breads and are breads with good crispness. However, these breads are not improved in property caused by chewing, such as cohesion of tissues and structure forming breads and tendency to adhere to the inside of the oral cavity. Therefore, if a person having impaired chewing or swallowing functions eats these breads, the breads are likely to be stuck in the throat.

As described above, no bread that has the same appearance, texture, flavor, etc., as normal breads and that is easily chewable and swallowable even by a person having impaired chewing or swallowing functions such as an aged person has been acquired, and such a bread has been desired to be provided.

CITATION LIST

PATENT LITERATURE

Patent Document 1: Japanese Patent No. 3639801
Patent Document 2: Japanese Patent No. 3683834
Patent Document 3: Japanese Patent No. 3534401
Patent Document 4: Japanese Laid-Open Patent Publication No. 2010-161998
Patent Document 5: Japanese Laid-Open Patent Publication No. 2009-219364
Patent Document 6: Japanese Patent No. 4459107
Patent Document 7: Japanese Patent No. 4535927

WO 2009/044538 A1 discloses a food product that is suitable for an elderly person or a person who has difficulty in chewing or swallowing, which food product is obtainable by impregnating and treating the food product with an enzyme.
JP 2010 207128 A discloses a method for softening cereals comprising impregnating the cereals with a first enzyme processing solvent containing at least one kind of enzyme, heating the cereals impregnated with the first enzyme processing solvent, impregnating the heated cereals with a second enzyme processing solvent containing at least one kind of enzyme, and heating the cereals impregnated with the second enzyme processing solvent under a condition of soaking said cereals in a third enzyme process in solving containing at least one kind of enzyme, wherein the enzyme contained in the first, second, and third enzyme processing solvent is amylase.
JP 2007 21839 A discloses a method of preparing a bread dough or a part baked bread comprising: (a) mixing flour, water and optionally other bakery ingredients to form a bread dough; (b) optionally part baking the dough to obtain a part baked bread; and (c) applying an enzyme material with proteolytic activity to the outside surface of the dough or the part baked bread which results in a baked bread with a crispy crust.

SUMMARY OF INVENTION

TECHNICAL PROBLEM

An objective of the present invention is to provide a method of producing a rebaked bread having the same appearance, texture, flavor, etc., as normal bread and having novel physical properties easily chewable and swallowable even by a person having impaired chewing or swallowing functions such as an aged person.

SOLUTION TO PROBLEM

As a result of extensive research for solving the problem, the inventors have found that bread produced by fermentation and baking in the same way as normal bread can be further rebaked after enzyme treatment to acquire bread of the objective of the present invention having the same appearance, texture, flavor, etc., as normal bread and having novel physical properties easily chewable and swallowable even by a person having impaired chewing or swallowing functions such as an aged person, thereby completing the present invention.
Therefore, the present invention relates to a method of producing a rebaked bread of (1) to (6) as follows having novel physical properties.

(1) A method of producing a rebaked bread having the following physical properties of 1) to 3) and a structure easily crushable by the tongue and the upper jaw:

1)

- a hardness equal to or less than $1 \times 10^4$ N/m$^2$ as measured by Creep Meter RE2-33005B (manufactured by YAMADEN), and
- a cohesiveness within a range of 0.2 to 0.8 as measured by Creep Meter RE2-33005B (manufactured by YAMADEN), wherein the hardness and cohesiveness are measured according to the method described in the description; and
- a syneresis rate equal to or less than 5 % as measured by Creep Meter RE2-33005B (manufactured by YAMADEN) according to the method described in the description;

2) an adhesiveness equal to or less than 50 J/m$^3$ as measured by Creep Meter RE2-33005B (manufactured by YAMADEN) according to the method described in the description; and

3)

- an adhesiveness of bakery products moistened by saliva equal to or less than 60 J/m$^3$ as measured by Creep Meter RE2-33005B (manufactured by YAMADEN) according to the method described in the description; and/or
- an adhesiveness of the bolus at swallow initiation equal to or less than 1500 J/m$^3$ as measured by Creep Meter RE2-33005B (manufactured by YAMADEN) according to the method described in the description;

the method comprising the steps of acquiring bread by fermenting and baking bread dough, performing an enzyme treatment of the bread, and rebaking the bread after the enzyme treatment;

wherein the enzyme is an enzyme having activity of one or more types of protease activity or peptidase activity; and wherein the step of performing the enzyme treatment of bread is done by bringing an enzyme solution which is water containing an enzyme into uniform contact with the tissues of the bread by immersion or injection and allowing a reaction to occur for a certain time under the condition causing an enzyme reaction.

(2) The method of (1), wherein the bread is subjected to the enzyme treatment by injection bringing an enzyme solution which is water containing an enzyme of 40 wt% to 120 wt% to bread weight into uniform contact with the bread.

(3) The method of (1), wherein the bread is subjected to the enzyme treatment by immersion bringing an enzyme solution which is water containing an enzyme of 100 wt% to 350 wt% to bread weight into uniform contact with the bread.

(4) The method of (2) or (3), wherein the bread subjected to the enzyme treatment is bread blended with gelled thickening polysaccharide or solated thickening polysaccharide having concentration of 1 wt% or more and wherein blending amount of the gelled thickening polysaccharide or the solated thickening polysaccharide is equal to or less than 70 % when flour in bakery dough is assumed to be 100 wt%.

(5) The method of (4), wherein the bread subjected to the enzyme treatment is bread blended with starch.

6. The method of (5), wherein blending amount of the starch is equal to or greater than 0.5 % when flour in bakery dough is assumed to be 100 wt%.

## ADVANTAGEOUS EFFECTS OF INVENTION

The present invention facilitates the production of the breads having the following physical properties of 1) to 3) and structure easily crushable by the tongue and the upper jaw:

1) hardness, cohesiveness, and a syneresis rate on the same level with normal bread;
2) adhesiveness equal to or less than 50 J/m$^3$; and
3) adhesiveness of bakery products moistened by saliva and/or adhesiveness of the bolus at swallow initiation lower than normal bread.

The breads produced according to the method of the present invention can be provided to wider generations as breads having the same appearance, texture, flavor, etc., as normal breads and the novel physical properties. The breads produced according to the method of the present invention are easily chewable and swallowable even by a person having impaired chewing or swallowing functions such as an aged person and therefore directly be utilized as care food etc.

## BRIEF DESCRIPTION OF DRAWINGS

[Fig. 1] Fig. 1 shows an Invention Product and Comparison Products (Example 1, Test Example 1).

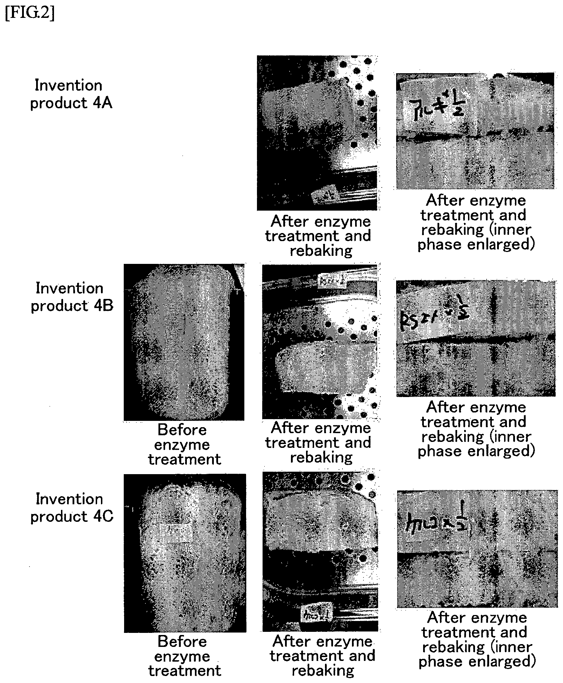

[Fig. 2] Fig. 2 shows Invention Products (Example 4).

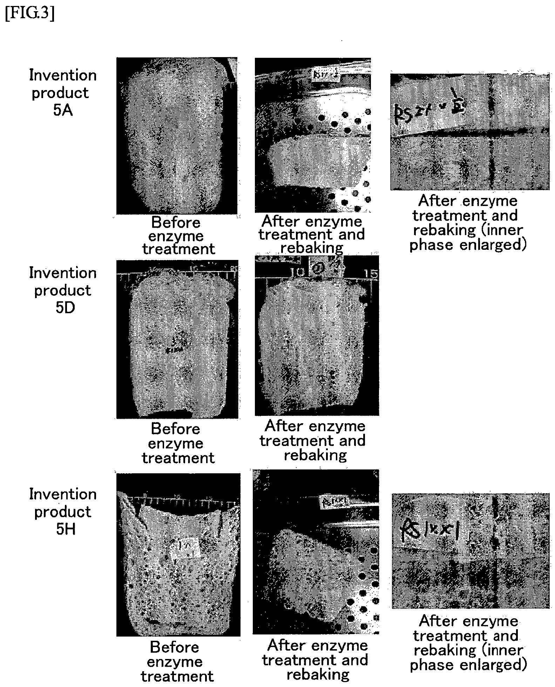

[Fig. 3] Fig. 3 shows Invention Products (Example 5).

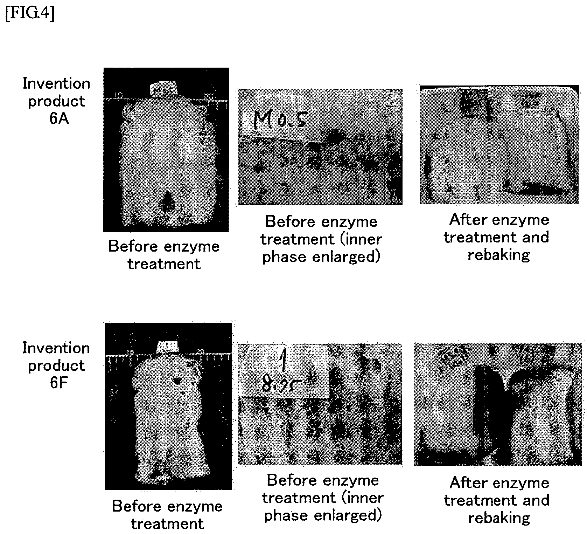

[Fig. 4] Fig. 4 shows Invention Products (Example 6).

DESCRIPTION OF EMBODIMENTS

"Breads" produced according to the method of the present invention include any breads having the following novel physical properties of 1) to 3) and structure easily crushable by the tongue and the upper jaw:

1) hardness, cohesiveness, and a syneresis rate on the same level with normal bread;
2) adhesiveness equal to or less than 50 J/m$^3$; and
3) adhesiveness of bakery products moistened by saliva and/or adhesiveness of the bolus at swallow initiation lower than normal bread.

The "normal bread" refers to food mainly made of starch acquired by fermenting and baking bread dough produced by adding water, yeast, salt, etc., to flour, rye, rye flour, rice flour, etc. The "normal bread" produced according to the method of the present invention may be white bread, French bread, rye bread, or rice flour bread, for example.

The "hardness" of the "breads" produced according to the method of the present invention refers to chewiness when the "breads" produced according to the method of the present invention are put into the oral cavity by a human etc., and bitten (chewed) by the teeth for the first time for eating etc., of the "breads" produced according to the method of the present invention.

The "hardness" measured by Creep Meter RE2-33005B (manufactured by YAMADEN) is employed as a criterion in the present invention. When the "breads" produced according to the method of the present invention are compressed twice by a plunger made of resin having a diameter of 20 mm and a height of 8 mm in this creep meter at a compression rate of 10 mm/s and a strain of 66.67 % (measurement temperature: $20\pm2$ °C, n=8), if the "hardness" is equal to or less than $1\times10^4$ N/m$^2$, the "breads" produced according to the method of the present invention can be considered to have "hardness on the same level" with the "normal bread".

The "cohesiveness" of the "breads" produced according to the method of the present invention refers to a restoring force (resilience) of the compressed "breads" trying to return to the shape before chewing when the "breads" produced according to the method of the present invention are put into the oral cavity by a human etc., and then compressed by first chewing for eating etc., of the "breads" produced according to the method of the present invention. The "first chewing" refers to that the "breads" produced according to the method of the present invention put into the oral cavity are interposed and chewed between the teeth or crushed by the tongue and the upper jaw for the first time.

The "cohesiveness" measured by Creep Meter RE2-33005B (manufactured by YAMADEN) is employed as a criterion in the present invention. When the "breads" produced according to the method of the present invention are measured in the same way as the "hardness" described above, if the "cohesiveness" is within a range of 0.2 to 0.8, the "breads" produced according to the method of the present invention can be considered to have "cohesiveness" on the same level with the "normal bread". The "breads" produced according to the method of the present invention preferably have the "cohesiveness" of 0.5 to 0.7 indicated by this measuring method.

The "syneresis rate" of the "breads" produced according to the method of the present invention refers to easiness of separation of water separating from a main body of the "breads" when the "breads" produced according to the method of the present invention are put into the oral cavity by a human etc., for eating etc., of the "breads" of the present invention and the moisture contained in the "breads" produced according to the method of the present invention seeps out due to the first chewing such as crushing by the tongue and the upper jaw.

The "syneresis rate" measured by Creep Meter RE2-33005B (manufactured by YAMADEN) as follows is employed as a criterion in the present invention.

The "breads" produced according to the method of the present invention or a portion thereof are put on a filter paper to measure weight (initial weight). Subsequently, after the "breads" the weight of which is measured (initial weight) are compressed once by a plunger made of resin having a diameter of 55 mm and a height of 8 mm in this creep meter at a compression rate of 1 mm/s and a strain of 66.67 %, the "breads" produced according to the method of the present invention or the portion thereof are removed from the filter paper to measure weight of syneresis (amount of syneresis) attached to the filter paper. The "syneresis rate" of the present invention can be obtained by calculating the rate of the amount of syneresis to the initial weight measured in this way.

If the calculated "syneresis rate" is equal to or less than 5 %, the "breads" produced according to the method of the present invention can be considered to have the "syneresis rate" on the same level with the "normal bread". The "breads" produced according to the method of the present invention preferably have the "syneresis rate" equal to or less than 2 %.

The "adhesiveness" of the "breads" produced according to the method of the present invention refers to easiness of adhesion to an oral cavity wall, particularly to the upper jaw etc., caused by the "breads" produced according to the method of the present invention coming into contact with saliva in the oral cavity and containing moisture when the "breads" produced according to the method of the present invention are put into the oral cavity by a human etc., for eating etc., of the "breads" produced according to the method of the present invention, or easiness of adhesion to throat etc., at the time of starting swallowing after chewing for swallowing. Breads having a higher value of the "adhesiveness" have physical properties making swallowing such as ingestion more difficult.

The "adhesiveness" measured by Creep Meter RE2-33005B (manufactured by YAMADEN) is employed as a criterion in the present invention. The "breads" produced according to the method of the present invention may have the "adhesiveness" equal to or less than 50 J/m$^3$ when measured in the same way as the "hardness" mentioned above.

With regard to the "adhesiveness" indicated in this case, "adhesiveness of bakery products moistened by saliva" refers to the easiness of adhesion to an oral cavity wall, particularly to the upper jaw etc., caused by the "breads" produced according to the method of the present invention coming into contact with saliva in the oral cavity and containing moisture when the "breads" produced according to the method of the present invention are put into the oral cavity by a human etc., for eating etc., of the "breads" produced according to the method of the present invention, which can be measured in more detail in the present invention.

The "adhesiveness of bakery products moistened by saliva" measured by Creep Meter RE2-33005B (manufactured by YAMADEN) as follows is employed as a criterion for the "adhesiveness of bakery products moistened by saliva" of the present invention.

After water is added as substitute for saliva to only one surface of the "breads" produced according to the method of the present invention or a portion thereof, the "breads" are placed in contact with a plunger made of resin having a diameter of 20 mm and a height of 8 mm in this creep meter and are compressed twice at a compression rate of 10 mm/s and a strain of 66.67 % for texture analysis, thereby measuring the "adhesiveness of bakery products moistened by saliva" of the present invention.

If the "adhesiveness of bakery products moistened by saliva" indicated by this measuring method is equal to or less than 60 J/m$^3$, the "breads" produced according to the method of the present invention can be considered to have the "adhesiveness of bakery products moistened by saliva" lower than normal bread.

With regard to the "adhesiveness" indicated in this case, "adhesiveness of the bolus at swallow initiation" of the "breads" produced according to the method of the present invention refers to the easiness of adhesion to the throat etc., at the time of starting swallowing after chewing for swallowing when the "breads" produced according to the method of the present invention are put into the oral cavity by a human etc., for eating etc., of the "breads" produced according to the method of the present invention, which can be measured in more detail.

The "adhesiveness of the bolus at swallow initiation" measured by Creep Meter RE2-33005B (manufactured by YAMADEN) as follows is employed as a criterion for the "adhesiveness of the bolus at swallow initiation" of the present invention.

A plurality of panelists consisting of healthy persons chew a portion of the "breads" produced according to the method of the present invention the average number of times a person chews for swallowing. Subsequently, a portion of the chewed "breads" is filled into a petri dish having a diameter of 40 mm and a height of 15 mm to the upper end and is compressed twice by a plunger made of resin having a diameter of 20 mm and a height of 8 mm in this creep meter at a compression rate of 10 mm/s and a strain of 66.67 % for texture analysis, thereby measuring the "adhesiveness of the bolus at swallow initiation" of the present invention.

If the "adhesiveness of the bolus at swallow initiation" indicated by this measuring method is equal to or less than 1500 J/m$^3$, the "breads" produced according to the method of the present invention can be considered to have the "adhesiveness of the bolus at swallow initiation" lower than the normal bread.

"Breads" produced according to the method of the present invention having the "hardness", "cohesiveness", and "a syneresis rate" as described above, having the "adhesiveness" equal to or less than 50 J/m$^3$, and having the "adhesiveness of bakery products moistened by saliva" and/or "adhesiveness of the bolus at swallow initiation" as described above are the breads "having novel physical properties" and "having structure easily crushable by the tongue and the upper jaw".

The term "having structure easily crushable by the tongue and the upper jaw" refers to that when the "breads" are put into the oral cavity and chewing etc., are performed with the tongue and the upper jaw for eating etc., tissues and structure forming the "breads" can be collapsed without cohesion into a lump like a rice cake and can be dispersed as small pieces in the oral cavity, resulting in a "melt-in-the-mouth sensation"

"Maximum stress in penetration" can also be used for indicating that the "breads" having novel physical properties "have structure easily crushable by the tongue and the upper jaw".

The "maximum stress in penetration" is the maximum value of stress required for crushing the structure forming the "breads" when the "breads" produced according to the method of the present invention are put into the oral cavity by a human etc., and chewing etc., are performed with the tongue and the upper jaw for eating etc., of the "breads" produced according to the method of the present invention.

The "maximum stress in penetration" measured by Texture Analyzer TA.XT plus (Stable Micro Systems) as follows is employed as a criterion in the present invention.

The "maximum stress in penetration" of the present invention can be measured as maximum stress (maximum stress in penetration) when the "breads" produced according to the method of the present invention are put on a measuring base of Texture Analyzer TA.XT plus (Stable Micro Systems) and penetrated by a column-shaped stainless-steel plunger of 5 mm in diameter at a compression rate of 1 mm/s and a strain of 150 %.

If the "maximum stress in penetration" measured in this way is equal to or less than $3.0 \times 10^4$ N/m$^2$, the "breads" produced according to the method of the present invention can be considered to "have structure easily crushable by the tongue and the upper jaw".

The "breads" produced according to the method of the present invention preferably have a "rate of saliva absorption" (absorption of saliva) lower than normal breads. The "rate of saliva absorption" refers to the easiness of absorption of saliva absorbed into the tissues of the "breads" when the "breads" produced according to the method of the present invention come into contact with saliva after the "breads" produced according to the method of the present invention are put into the oral cavity by a human etc., for eating etc., of the "breads" of the present invention. Breads having a higher value of the "rate of saliva absorption" have physical properties making chewing and swallowing more difficult since saliva is absorbed into the tissues of the "breads" at a higher rate.

The "rate of saliva absorption" measured as follows is employed as a criterion for the "rate of saliva absorption" of the present invention.

After weight of the "breads" of the present invention or a portion thereof (pre-chewing weight) is measured, the "breads" are chewed 15 times in the oral cavity and weight after chewing (post-chewing weight) can be measured to calculate a rate of weight increased by chewing relative to the pre-chewing weight, thereby obtaining the "rate of saliva absorption" of the present invention.

If the "rate of saliva absorption" is equal to or less than 5 %, the "breads" produced according to the method of the present invention can be considered to have the "rate of saliva absorption" lower than normal bread. The "breads" produced according to the method of the present invention preferably have a "rate of saliva absorption" equal to or less than 2 %.

When the respective physical properties are measured as described above, preferably, the "breads" produced according to the method of the present invention are breads having: 1) "hardness", "cohesiveness", and "a syneresis rate" on the same level with normal bread such as "hardness" equal to or less than $1 \times 10^4$ N/m$^2$, "cohesiveness" from 0.2 to 0.8, and "a syneresis rate" equal to or less than 5 %; 2) "adhesiveness" equal to or less than 50 J/m$^3$; and 3) "adhesiveness of bakery products moistened by saliva" equal to or less than 60 J/m$^3$ and/or "adhesiveness of the bolus at swallow initiation" equal to or less than 1500 J/m$^3$, which are lower than normal bread. Preferably, the "breads" produced according to the method of the present invention are also breads having 4) "maximum stress in penetration" equal to or less than $3.0 \times 10^4$ N/m$^2$ as breads having structure easily crushable by the tongue and the upper jaw.

Preferably, the "breads" produced according to the method of the present invention further have a "rate of saliva absorption" equal to or less than 5 % in addition to the physical properties described above.

A "rate of water absorption" (absorption of water) may be added to the physical properties of the "breads" produced according to the method of the present invention. The "rate of water absorption" of the "breads" produced according to the method of the present invention refers to a maximum amount of moisture that can be absorbed into the tissues of the "breads". Breads having a higher value of the "rate of water absorption" have physical properties making chewing and swallowing more difficult since moisture in the oral cavity including saliva is absorbed into the tissues of the "breads" at a higher rate as a whole as is the case with the breads having a higher value of the "rate of saliva absorption".

The "rate of water absorption" measured as follows is employed as a criterion for the "rate of water absorption" of the present invention.

After weight of the "breads" produced according to the method of the present invention or a portion thereof (initial weight) is measured, the "breads" are immersed in water for 5 seconds. Subsequently, after water is drained for 5 seconds, weight after water absorption can be measured to calculate a rate of the weight after water absorption relative to the initial weight, thereby obtaining the "rate of water absorption" of the present invention.

The "breads" produced according to the method of the present invention preferably have a "rate of water absorption" equal to or less than 100 %.

If the "rate of water absorption" is added to the physical properties of the "breads" produced according to the method of the present invention, the "breads" produced according to the method of the present invention preferably have a "rate of water absorption" equal to or less than 100 % in addition to the physical properties described above.

The "breads" produced according to the method of the present invention are acquired by performing enzyme treatment of a raw material that is "bread" acquired by fermenting and baking bread dough of white bread, French bread, rye bread, etc.

The "enzyme treatment" refers to bringing enzyme solution that is a solvent such as water containing an enzyme into contact with the tissues of the "bread" used as a raw material through application, immersion, injection, spray, etc., and allowing a reaction to occur for a certain time under the condition causing an enzyme reaction.

The "breads" produced according to the method of the present invention are acquired by rebaking such enzyme-treated "bread" and the rebaking can also deactivate the enzyme contained in the "bread".

The "bread" used as a raw material in the method of the present invention may be any bread. The "bread" may be any "bread" acquired by fermenting and baking bread dough and may be bread privately prepared with a conventionally known method or commercially available bread.

"Bread" blended with "thickening polysaccharide" is particularly preferably used as a raw material and "bread" blended with "thickening polysaccharide" and "starch" is more preferably used as a raw material.

Such a "thickening polysaccharide" blended in the "bread" used as a raw material may be any thickening polysaccharide permitted as food additives. For example, such a "thickening polysaccharide" may be sodium alginate, glucomannan or gellan gum, agar, pectin, curdlan, carrageenan, tamarind gum, etc. A plurality of these thickening polysaccharides may be blended in a combined manner and it is particularly preferable to blend glucomannan. These thickening polysaccharides may be commercially available or may privately be prepared and it is preferable to blend a thickening polysaccharide 1 wt% or more of which is gelled or solated.

The gelled thickening polysaccharide or solated thickening polysaccharide may directly be blended in the ingredients of "bread". The gelled thickening polysaccharide may further be formed into a 1-cm square dice or block shape or may roughly be chopped by a mixer etc., so as to be easily kneaded into dough and may be blended in the ingredients of "bread".

The gelled thickening polysaccharide or solated thickening polysaccharide as described above is preferably blended such that the blending amount (baker's % (blending weight % when flour in bakery dough is assumed to be 100 wt%)) is equal to or less than 70 % to "bread".

"Starch" blended in the "bread" may be any starch permitted as food additives. For example, the "starch" of the present invention may be potato starch, tapioca starch, corn starch, wheat starch, legume starch, sweet potato (sweet potato) starch, rice starch, etc., and a plurality of these starches may be blended in a combined manner. These starches may be commercially available or may privately be prepared. It is particularly preferable to blend Matsunorin P7 (manufactured by Matsutani Chemical Industry) that is processed starch mainly made from potato starch.

The starch as described above is preferably blended such that the blending amount (baker's percent (blending weight % when flour in bakery dough is assumed to be 100 wt%)) is equal to or less than 0.5 % to "bread".

The "method of producing breads" of the present invention is defined in the claims.

The "method of producing breads" of the present invention includes a step of performing enzyme treatment of a raw material that is "bread" acquired by fermenting and baking bread dough and a step of rebaking after the enzyme treatment.

The step of performing enzyme treatment of "bread" used as a raw material refers to bringing enzyme solution that is water containing an enzyme into uniform contact with the tissues of the "bread" by immersion or injection, and allowing a reaction to occur for a certain time under the condition causing an enzyme reaction.

The enzyme contained in the enzyme solution may be any conventionally known enzyme that enables the production of the "breads" having novel physical properties of the present invention. For example, such an enzyme may be an enzyme having activity of one or more types of protease activity or peptidase activity and the enzyme may be commercially available enzyme such as Papain W-40 (manufactured by Amano Enzyme) and Protease P "Amano" 3G (manufactured by Amano Enzyme).

If the enzyme solution is brought into contact with the "bread" by injection, the enzyme solution is preferably 40 wt% to 120 wt%, particularly preferably 50 wt% to 100 wt%, to the bread weight. If the enzyme solution is brought into contact with the "bread" by immersion, the enzyme solution is preferably 100 wt% to 350 wt% to the bread weight.

The concentration of the enzyme contained in the enzyme solution brought into contact with the "bread" in this way is preferably equal to or greater than 0.005 wt%.

The step of rebaking the bread enzyme-treated in this way may be performed with any device under any condition as long as the enzyme-treated bread can be rebaked in the step. For example, the enzyme-treated bread may be placed in a hotel pan, covered with a dedicated cover for the hotel pan, and rebaked by steam convection (SelfCooking Center 61 manufactured by RATIONAL) under the condition of a heat mode (humidity of 0 %, inside temperature of 130 °C, heating time of 30 minutes) or may be rebaked by a microwave oven range, gas oven, etc.

By rebaking the enzyme-treated bread, moisture etc., contained in the enzyme solution added to the "bread" for the enzyme treatment is removed and the activity of the enzyme can be deactivated.

The present invention will hereinafter be described in more detail with Examples and Test Examples; however, these examples are not limitations of the present invention.

EXAMPLE 1

<Materials>

1)Bread

One hundred seventy five (175) grams of strong flour, 10.5 g of vegetable oil and fat, 21 g of white soft sugar, 3.9 g of salt, 10.5 g of skim milk, 113.8 g of water, and 2.1 g of dry yeast were put into a dedicated container of a household bread-baking machine (Home Bakery (SD-BMS101) manufactured by Panasonic).

Bread was produced with an accompanying hook, by baking in a Basic Bread Standard Baked Color Mode and, after cooling, the bread was sliced into a thickness of 20 mm.

2) Enzyme Solution (A)

Papain W-40 (manufactured by Amano Enzyme) was dissolved into water to form a 0.01 wt% aqueous solution, which was used as an enzyme solution (A).

<Producing Method>

One hundred weight percent (100 wt%, 65 g) of the enzyme solution (A) per bread weight (65 g) was brought into contact with the bread (20 mm thick) of 1. 1) above. A contacting method was implemented by immersion (Invention Product 1B), or injection (Invention Product 1C).

The immersion was performed by putting the enzyme solution (A) in a vat and immersing therein the whole of the bread (20 mm thick) of 1. 1) above.

The injection was performed by putting the enzyme solution (A) into a syringe (manufactured by Terumo, Terumo syringe with needle 26G×1/2") and inserting the needle into the front and rear surfaces of the bread (20 mm thick) of 1. 1) above. An injection amount of each location was set to about several mL and the injection was performed at a plurality of locations so as to cover the whole of the bread.

Each of these breads was left to stand in a refrigerating room at 4 °C for 16 hours and treated by causing an enzyme reaction. After the completion of the enzyme reaction, the breads were placed in a hotel pan, covered with a dedicated cover for the hotel pan, and rebaked by steam convection (SelfCooking Center 61 manufactured by RATIONAL) under the condition of the heat mode (humidity of 0 %, inside temperature of 130 °C, heating time of 30 minutes) to acquire Invention Products 1B and 1C.

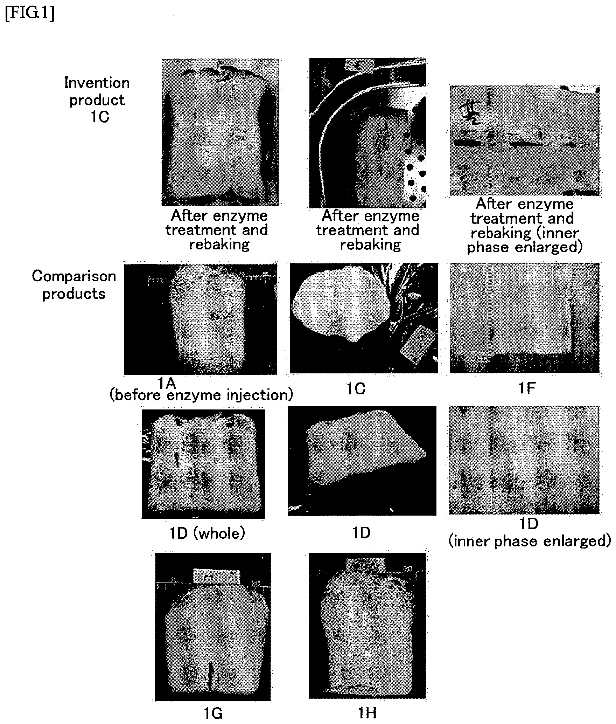

With regard to Invention Product 1C, enlarged pictures of Invention Product 1C acquired by the enzyme treatment and rebaking of the bread of 1. 1) above and an inner phase thereof are depicted in Fig. 1 (upper panel).

<Identification of Physical Properties>

Respective physical properties of Invention Products 1B and 1C and Comparison Products produced in the following Examples etc., were identified by the following methods 1 to 7.

1. Hardness, Adhesiveness, and Cohesiveness

Hardness, adhesiveness, and cohesiveness of Invention Products and Comparison Products were examined with reference to *"Test Method of Food for Person with Swallowing Difficulty: Test Method of Hardness, Adhesiveness, and Cohesiveness"* in *"Permission of Labeling for Food for Special Dietary Users"* (Notice No. 0212001 of the Pharmaceutical and Food Safety Bureau, Notice from Director of the Department of Food Safety, Pharmaceutical and Food Safety Bureau, Ministry of Health, Labour and Welfare, February 12, 2009) as follows.

Samples were acquired by cutting Invention Products and Comparison Products into 30×30×20 mm after removing the crust portion (outer skin portion of bread (crust of bread)) and were placed on the measuring base of Creep Meter RE2-33005B (manufactured by YAMADEN).

The sample was compressed twice by a plunger made of resin having a diameter of 20 mm and a height of 8 mm at a compression rate of 10 mm/s and a strain of 66.67 % to measure each of hardness, adhesiveness, and cohesiveness (measurement temperature: 20±2 °C, n=8).

2. Syneresis Rate

Syneresis rates of Invention Products and Comparison Products were examined with reference to Mai Nohara (the Graduate School of Comprehensive Scientific Research, Prefectural University of Hiroshima) *et al., "Study on Syneresis of Food for Person with Swallowing Difficultly",* the 26th Annual Meeting of Japanese Society for Parenteral and Enteral Nutrition (JSPEN 2011), Poster Presentation SP-18.

Samples were acquired by cutting Invention Products and Comparison Products into 30×30×20 mm after removing the crust portion (outer skin portion of bread (crust of bread)).

The cut sample was placed on two overlapping sheets of filter paper on a plastic tray to measure weight of the sample (initial weight).

The sample was then compressed once by a plunger made of resin having a diameter of 55 mm and a height of 8 mm at a compression rate of 1 mm/s and a strain of 66.67 %.

The sample was removed after the compression to measure weight of syneresis (amount of syneresis) attached to the filter paper and the syneresis rate was calculated based on the following Formula 1 (n=5).

[Formula 1]

$$\text{Syneresis rate (\%)} = \text{amount of syneresis (g)/initial weight (g)} \times 100$$

3. Rate of water absorption

Samples were acquired by cutting Invention Products and Comparison Products into $30 \times 30 \times 20$ mm after removing the crust portion (outer skin portion of bread (crust of bread)) and the weights of the samples were measured.

Subsequently, after the samples were put into a sieve and immersed in water for 5 seconds, water was drained for 5 seconds and the weights of the samples after water absorption (weight after water absorption) were measured. The rate of water absorption was calculated based on the following Formula 2 (n = 5).

[Formula 2]

$$\text{Rate of water absorption (\%)} = \text{weight after water absorption (g)/initial weight}$$

$$\text{(g)} \times 100$$

4. Rate of saliva absorption

Each of Invention Products and Comparison Products was weighed to $4.0 \pm 0.1$ g (pre-chewing weight). The weighed sample was chewed 15 times and then collected from the oral cavity to measure the weight after chewing (post-chewing weight). The rate of saliva absorption was calculated based on the following Formula 3 (n=5).

[Formula 3]

$$\text{Rate of saliva absorption (\%)} = [\text{post-chewing weight (g)} - \text{pre-chewing weight}$$

$$\text{(g)]/ pre-chewing weight (g)} \times 100$$

5. Adhesiveness of Bakery Products Moistened By Saliva

Adhesiveness of bakery products moistened by saliva of Invention Products and Comparison Products was examined with reference to FY 2008 Research Result of Health Labour Sciences Research Grant (Special Research Project) Shared Research Report *"Factor Analysis of Suffocation Due to Food - Human Factor and Risk of Food - Physical Property Analysis of Causative Food: Analysis of Physical Properties of Rice/Bread"*, p.28 and Fig. 8, as follows.

Samples were acquired by cutting Invention Products and Comparison Products into $30 \times 30 \times 20$ mm after removing the crust portion (outer skin portion of bread (crust of bread)) and 1 mL of water was added to only one surface of each of the samples.

The sample was set such that the surface with water added came into contact with a plunger made of resin having a diameter of 20 mm and a height of 8 mm, and was compressed twice at a compression rate of 10 mm/s and a strain of 66.67 % for texture analysis, thereby measuring the adhesiveness of bakery products moistened by saliva (n=5).

6. Adhesiveness of the bolus at swallow initiation

Adhesiveness of the bolus at swallow initiation of Invention Products and Comparison Products was examined with reference to a reference (Jpn. J. Oral Biol., 45, 569-63 (2003)).

Each of Invention Products and Comparison Products was first weighed to 7.0 g. The weighed sample was put into the mouth and chewed to examine the average number of times of chewing until start of swallowing (n=5). The average number of times of chewing was 13 for all Invention Products, 60 for Comparison Products 1A, 1G, and 1H, 13 for Comparison Product 1B, 6 for Comparison Products 1D, 1E, and 1F, and 3 for Comparison Product 1C.

Each of the samples was chewed the average number of times of chewing until start of swallowing and was collected from the oral cavity and filled evenly to the top into a stainless-steel petri dish having a diameter of 40 mm and a height of 15 mm. The sample filled into the petri dish was compressed twice by a plunger made of resin having a diameter of 20 mm and a height of 8 mm at a compression rate of 10 mm/s and a strain of 66.67 % for texture analysis, thereby measuring the "adhesiveness of the bolus at swallow initiation" (n=3).

7. Maximum Stress in Penetration

Maximum stress in penetration of Invention Products and Comparison Products was examined with reference to a Texture Analyzer user seminar material (Stable Micro Systems).

Each of the prepared Invention and Comparison Products (20 mm thick) was directly used as a sample, placed on the measuring base of Texture Analyzer TA.XT plus (Stable Micro Systems), and penetrated by a column-shaped stainless-steel plunger of 5 mm in diameter at a compression rate of 1 mm/s and a strain of 150 % to measure the maximum stress (maximum stress in penetration).

[Test Example 1-1]

Ten panelists tried out each of the breads acquired in Example 1 (Invention Products 1B and 1 C) and Comparison Products 1A to 1H acquired as comparison examples with the following methods to perform sensory evaluation in accordance with evaluation criteria described below. The Invention Products and Comparison Products having the crust portion (outer skin portion of bread (crust of bread)) were separated into the crust portion and an inner phase portion excluding the crust portion and the sensory evaluation was performed by trying out each of the portions. The physical properties of Comparison Products were examined in the same way as Example 1.

Comparison Product 1 A: The bread acquired in 1. 1) above was directly used as Comparison Product 1 A without enzyme treatment.

Comparison Product 1B: The Comparison Product 1B was produced as follows.

The product was produced in the same way as Invention Product 1C except that water of 100 wt% to bread weight was applied and brought into contact with the bread acquired in 1. 1) above instead of the enzyme solution (A).

Comparison Product 1C: The Comparison Product 1C was produced as follows.

After an inner phase portion of commercially available white bread was torn into small pieces and put into a pan, milk was poured into the pan such that the bread was sufficiently immersed, and was heated until the bread melted and completely lost the shape to acquire bread porridge.

Comparison Product 1D: The Comparison Product 1D was produced with reference to Patent Document 4 as follows.

After putting 850 g of strong flour, 150 g of rice flour, 80 g of white soft sugar, 100 g of margarine, 30 g of skim milk, 20 g of salt, 30 g of raw yeast, 2 g of hydroxypropyl methylcellulose, 3 g of ascorbic acid, and 750 g of water into a mixer (Kitchen Aid KSM5 manufactured by Kitchen Aid), the mixture was mixed at low speed for two minutes and medium speed for two minutes and placed in a mold for bread. After one hour of final proof at a temperature of 38 °C and a relative humidity of 85 %, the mixture was baked by steam convection (SelfCooking Center 61 manufactured by RATIONAL) under the condition of the heat mode (humidity of 0 %, temperature of 210 °C, heating time of 30 minutes).

After cooling, the acquired bread was sliced into a thickness of 20 mm and one slice was immersed in 100 g of syrup (30 % granulated sugar solution) per 100 g of bread.

Comparison Product 1E: Used as Comparison Product 1E was "Rakuraku Shoku-Pan" manufactured by Takaki Bakery commercially available as bread having softness different from normal bread and characterized in that the bread is easily crushable by the tongue.

Comparison Product 1F: The Comparison Product 1F was produced with reference to Patent Document 5 as follows.

After 200 g of raw bread crumbs, 400 g of milk, and 10 g of white soft sugar were put into a pan and boiled, the mixture was put into a mixer (SKP-B701 manufactured by Tiger) and sufficiently stirred. The mixture was then returned to the pan and boiled again after adding 40 g of Aqua Gelee Powder (manufactured by FoodCare). After boiling, the acquired mixture was poured into a rectangular mold and cooled.

Comparison Product 1 G: The Comparison Product 1 G was produced with reference to Patent Document 6 as follows.

After putting 700 g of strong flour, 20 g of raw yeast, 1 g of yeast food, and 400 g of water into a mixer (Kitchen Aid KSM5 manufactured by Kitchen Aid), the mixture was mixed at low speed for two minutes and medium speed for two minutes to acquire sponge dough. The sponge dough was fermented for four hours at a temperature of 28 °C and a relative humidity of 85 %.

The fermented sponge dough was put into the mixer again and 300 g of semi-strong flour, 50 g of wheat starch, 15 g of salt, 20 g of white soft sugar, 100 g of gel composition (containing 1 % agar and 0.1 % guar gum), 140 g of water, and 0.4 g of Bakezyme (manufactured by DSM Food Specialities) were added and mixed at low speed for three minutes and medium speed for three minutes.

After further adding 80 g of margarine, the mixture was mixed at low speed for three minutes, medium speed for three minutes, and high speed for one minute and, after taking 20 minutes of floor time, the acquired dough was divided by 185 g and rounded. After taking 20 minutes of bench time, the dough was molded by a molder and six pieces were formed into a U-shape, put into a three-loaf type Pullman mold, final-proofed at a temperature of 38 °C and a relative humidity of 85 % for 60 minutes, and baked by steam convection (SelfCooking Center 61 manufactured by RATIONAL) under the condition of the heat mode (humidity of 0 %, temperature of 175 °C, heating time of 40 minutes).

Comparison Product 1 H: The Comparison Product 1H was produced with reference to Patent Document 7 as follows.

After putting 700 g of strong flour, 20 g of raw yeast, 1 g of yeast food, 100 g of egg yolk, and 330 g of water into a mixer (Kitchen Aid KSM5 manufactured by Kitchen Aid), the mixture was mixed at low speed for two minutes and medium speed for two minutes to acquire sponge dough. The sponge dough was fermented for four hours at a temperature of 28 °C and a relative humidity of 85 %.

The fermented sponge dough was put into the mixer again and 300 g of semi-strong flour, 12 g of salt, 80 g of white soft sugar, 30 g of skim milk, 5 g of skimmed condensed milk, 50 g of starch syrup, 5 g of yeast, 120 g of water, and 0.3 g of Bakezyme (manufactured by DSM Food Specialities) were added and mixed at low speed for three minutes, medium speed for three minutes, and high speed for one minute.

After further adding 300 g of margarine, the mixture was mixed at low speed for three minutes, medium speed for three minutes, and high speed for one minute and, after taking 30 minutes of floor time, the acquired dough was divided by 230 g and rounded. After taking 20 minutes of bench time, the dough was molded by a molder and six pieces were formed into a U-shape, put into a three-loaf type Pullman mold, final-proofed at a temperature of 38 °C and a relative humidity of 85 % for 54 minutes, and baked by steam convection (SelfCooking Center 61 manufactured by RATIONAL) under the condition of the heat mode (humidity of 0 %, temperature of 175 °C, heating time of 45 minutes).

Among Comparison Products 1A to 1H acquired as described above, photographs of Comparison Products 1A, 1C, 1D (whole, inner phase enlarged), 1F, 1G, and 1H are depicted in Fig. 1 (lower panel).

<Evaluation Criteria>

Appearance

    Cross mark: completely different from normal bread
    Triangle: close to but different from normal bread
    Single-circle: close to normal bread
    Double-circle: same as normal bread

Flavor

    Cross mark: completely different from normal bread
    Triangle: close to but different from normal bread
    Single-circle: close to normal bread
    Double-circle: same as normal bread

Texture

    Cross mark: completely different from normal bread
    Triangle: close to but different from normal bread
    Single-circle: close to normal bread
    Double-circle: same as normal bread

Melt-in-the-mouth sensation

Cross mark: cohesive in the oral cavity and forming a non-collapsible lump
Triangle: slightly cohesive in the oral cavity and non-collapsible in some portion
Single-circle: hardly cohesive in the oral cavity and collapsible
Double-circle: not cohesive in the oral cavity at all and collapsible

Overall

Cross mark: having structure extremely difficult to crush by the tongue and the upper jaw for swallowing
Triangle: having structure crushable by the tongue and the upper jaw for swallowing although not easy.
Single-circle: having structure easily crushable by the tongue and the upper jaw for swallowing
Double-circle: having structure easily crushable by the tongue and the upper jaw for swallowing even by a person having impaired chewing or swallowing functions or an aged person with a smaller amount of saliva.

For each of the criteria, a cross mark, a triangle, a single-circle, and a double-circle were converted into zero, one, two, and three points, respectively, and the points were summed and divided by the number of panelists to obtain an average point.

Final evaluation was made by giving a cross mark, a triangle, a single-circle, and a double-circle to an average point of 0 to 0.5, 0.6 to 1.5, 1.6 to 2.5, and 2.6 to 3.0, respectively.

The physical properties and the results of the sensory evaluation of the bread acquired in Example 1 (Invention Products 1B and 1C) and Comparison Products 1A to 1H are shown in Table 1-1 and Table 1-2.

[Table 1-1]

| | | | Invention Products | | Comparison Products | | | |
|---|---|---|---|---|---|---|---|---|
| | | | 1 B | 1 C | 1 A | 1 B | 1 G | 1 H |
| Contacting method | | | Imm. | Inj. | — | Wt. inj. | — | — |
| Sensory evaluation | | Appearance | △ | △ | ◎ | △ | ◎ | ◎ |
| | | Flavor | △ | △ | ◎ | △ | ◎ | ◎ |
| | | Texture (inner phase) | △ | △ | ◎ | △ | ◎ | ◎ |
| | | MitMS (inner phase) | △ | ○ | × | × | × | × |
| | | Texture (crust portion) | △ | △ | ◎ | △ | ◎ | ◎ |
| | | MitMS (crust portion) | △ | ○ | × | × | × | × |
| Physical property values | | Hardness [N/m²] | 6980 | 6880 | 8480 | 7575 | 8790 | 8836 |
| | | Adhesiveness [J/m³] | 25.6 | 25.4 | 8.24 | 31.3 | 7.85 | 7.67 |
| | | Cohesiveness | 0.623 | 0.612 | 0.781 | 0.59 | 0.671 | 0.678 |
| | | Syneresis rate [%] | 0.11 | 0.12 | 0.17 | 1.78 | 0.27 | 0.26 |
| | | Rate of water abs. [%] | 75.35 | 76.34 | 216 | 103.5 | 259 | 261 |
| | | Rate of saliva abs. [%] | 0.1 | 0.1 | 12.3 | 0.9 | 16.3 | 15.5 |
| | | Adhesiveness of bakery products moistened by saliva [J/m³] | 53.3 | 54.5 | 63.5 | 50.5 | 68.4 | 67.4 |
| | | Adhesiveness of the bolus at swallow initiation [J/m³] | 1460 | 1410 | 2380.5 | 1530 | 2522.7 | 2530.5 |
| | | Max. st. pen. [N/m²] | 18900 | 18700 | 78800 | 53700 | 81300 | 77800 |

MitMS: Melt-in-the-mouth sensation
abs. absorption
Max. st. pen.: Maximum stress in penetration
App.: Application
Imm.: Immersion
Inj.: Injection
Wt. inj.: Water injection

As described in Table 1-1, Comparison Products 1A, 1G, and 1H all had the appearance, flavor, and texture "same as normal bread" because the bread (20 mm thick) to be enzyme-treated for Invention Products 1B and 1C was directly (without enzyme treatment) used as Comparison Product 1A and Comparison Products 1G and 1H were all produced as normal bread in the same way as normal bread by using certain compositions.

On the other hand, Invention Products 1B and 1C with the enzyme solution (A) injected and Comparison Product 1B with water injected instead of the enzyme solution (A) had the appearance, flavor, and texture "close to but different from normal bread".

However, Comparison Products 1A, 1B, 1G, and 1H all had the inner portion and the crust potion "cohesive in the oral cavity and forming a non-collapsible lump" in terms of the melt-in-the-mouth sensation when crushed for eating, exhibiting poor melt-in-the-mouth sensation. On the other hand, the enzyme-treated and rebaked Invention Products 1B and 1C were "slightly cohesive in the oral cavity and non-collapsible in some portion" or "hardly cohesive in the oral cavity and collapsible", exhibiting improved melt-in-the-mouth sensation.

Such results of the sensory evaluation of Invention Products 1B and 1C and Comparison Products 1A, 1B, 1G, and 1H can be indicated from the physical properties.

In particular, all these Invention and Comparison Products exhibited the hardness, the adhesiveness, and the syneresis rate same as the physical properties of normal bread (physical properties exhibited by normal bread: hardness of $1 \times 10^4$ N/m² or less, cohesiveness of 0.2 to 0.8, and a syneresis rate of 5 % or less).

However, as is indicated by the high maximum stress in penetration, Comparison Products 1A, 1B, 1G, and 1H did not have structure easily crushable by the tongue and the upper jaw as compared to Invention Products 1B and 1C and had higher adhesiveness of the bolus at swallow initiation, making the possibility of choking in the throat higher.

[Table 1-2]

| | | Invention Products | | Comparison Products | | | |
|---|---|---|---|---|---|---|---|
| | | 1 B | 1 C | 1 C | 1 D | 1 E | 1 F |
| Contacting method | | Imm. | Inj. | — | Syr. imm. | — | — |
| Sensory evaluation | Appearance | △ | △ | × | ○ | ○ | × |
| | Flavor | △ | △ | △ | × | × | △ |
| | Texture (inner phase) | △ | △ | × | × | × | × |
| | MitMS (inner phase) | △ | ○ | ○ | ◎ | ◎ | ○ |
| | Texture (crust portion) | △ | △ | — | × | × | — |
| | MitMS (crust portion) | △ | ○ | — | ◎ | ◎ | — |
| Physical property values | Hardness [N/m²] | 6980 | 6880 | 3100 | 6900 | 6800 | 4730 |
| | Adhesiveness [J/m³] | 25.6 | 25.4 | 87 | 60.8 | 61.2 | 1130 |
| | Cohesiveness | 0.623 | 0.612 | 0.453 | 0.332 | 0.355 | 0.533 |
| | Syneresis rate [%] | 0.11 | 0.12 | — | 12.04 | 11.55 | 2.78 |
| | Rate of water abs. [%] | 75.35 | 76.34 | — | 77.5 | 78.1 | 32.4 |
| | Rate of saliva abs. [%] | 0.1 | 0.1 | — | 0.1 | 0.1 | 0.3 |
| | Adhesiveness of bakery products moistened by saliva [J/m³] | 53.3 | 54.5 | - | 81.9 | 85.5 | 29.9 |
| | Adhesiveness of the bolus at swallow initiation [J/m³] | 1460 | 1410 | - | 335.9 | 402.4 | 855.7 |
| | Max. st. pen. [N/m²] | 18900 | 18700 | — | 7420 | 6930 | 6670 |

MitMS: Melt-in-the-mouth sensation
abs.: absorption
Max. st. pen.: Maximum stress in penetration
App.: Application
Imm.: Immersion
Inj.: Injection
Syr. imm.: Syrup immersion

As described in Table 1-2, both Comparison Product 1C produced as bread porridge and Comparison Product 1F produced as bread-like food by using raw bread crumbs had appearance and texture "completely different from normal bread".

The Comparison Products 1D and 1E produced in the same way as normal bread and immersed in syrup had flavor and texture different from normal bread and gave a feeling of strangeness as compared to eating normal bread. These breads had a higher syneresis rate and were separated into liquid and solid in the oral cavity, causing a higher risk of accidental swallowing for a person having impaired chewing or swallowing functions.

As described above, since those produced as Comparison Products 1A to 1H had poor melt-in-the-mouth sensation even though appearance, flavor, and texture were the same as normal bread, or had appearance, texture, etc., completely different from normal bread even though melt-in-the-mouth sensation was favorable, the satisfaction of eating normal bread could not be acquired from any of the products.

On the other hand, all Invention Products 1 Band 1C produced in Example 1 had appearance, flavor, and texture close to normal bread, had both the inner phase and the crust portion with "structure crushable by the tongue and the upper jaw for swallowing although not easy" or "structure easily crushable by the tongue and the upper jaw for swallowing", and had improved melt-in-the-mouth sensation. Particularly, Invention Product 1C was brought into contact with the enzyme solution (A) by injection and had the improved melt-in-the-mouth sensation because the enzyme solution (A) uniformly infiltrated into and acted on the center portion of the tissues of the bread.

The Invention Products 1B and 1C had hardness, cohesiveness, and a syneresis rate on the same level with normal bread (hardness of $1 \times 10^4$ N/m$^2$ or less, cohesiveness of 0.2 to 0.8, and a syneresis rate of 5 % or less), had adhesiveness of 50 J/m$^3$ or less, had adhesiveness of bakery products moistened by saliva and/or adhesiveness of the bolus at swallow initiation lower than normal bread (adhesiveness of bakery products moistened by saliva of 60 J/m$^3$ or less; adhesiveness of the bolus at swallow initiation of 1500 J/m$^3$ or less) and therefore hardly causing choking in the throat as compared to eating normal bread.

The Invention Products 1B and 1C had lower maximum stress in penetration (maximum stress at the time of penetration of $3.0 \times 10^4$ N/m$^2$ or less) and had structure easily crushable by the tongue and the upper jaw and, therefore, it was confirmed that the products have physical properties making eating easier even for a person having impaired chewing or swallowing functions or an aged person with a smaller amount of saliva.

[Test Example 1-2]

After Comparison Products 1G and 1H acquired in Test Example 1-2 were treated by contact with the enzyme solution (A) as was the case with Invention Product 1C, the products were rebaked to acquire Comparison Products 1 G' and 1H'.

Ten panelists tried out these products to perform sensory evaluation in the same manner as Test Example 1. The result of the sensory evaluation is described in Table 1-3.

[Table 1-3]

| Sensory evaluation | | | |
|---|---|---|---|
| | Inv. Product | Comparison Products | |
| | 1C | 1 G' | 1H' |
| Appearance | Δ | × | × |
| Flavor | Δ | Δ | Δ |
| Texture (inner phase) | Δ | × | × |
| MitMS (inner phase) | ○ | ○ | ○ |
| Texture (crust portion) | Δ | × | × |
| MitMS (crust portion) | ○ | ○ | ○ |
| MitMS: Melt-in-the-mouth sensation Inv. Product: Invention product | | | |

As described in Table 1-3, although improvement in melt-in-the-mouth sensation was recognized in both Comparison Products 1G' and 1H' acquired by rebaking after enzyme treatment of Comparison Products 1 G and 1 H produced in the same way as normal bread by using certain compositions etc., Comparison Products 1G' and 1H' had appearance and texture "completely different from normal bread" and flavor "close to but different from normal bread".

Therefore, from this result, it was confirmed that even if bread is produced in the same way as normal bread by using certain compositions etc., so as to acquire crisp bread and is simply enzyme-treated and rebaked, the breads having novel physical properties of the present invention, i.e., the breads that have the appearance, texture, flavor, etc., same as normal bread and that can easily be chewed and swallowed by a person having impaired chewing or swallowing functions such as an aged person, are not necessarily acquired

EXAMPLE 2

Invention Products 2A to 2D were produced in the same producing method as Invention Product 1C except that the enzyme solution (A) prepared in the same way as 2) of Example 1 was brought into contact with the bread (20 mm thick) acquired in the same way as 1) of Example 1 by injection to 40 wt% (Invention Product 2A), 60 wt% (Invention Product 2B), 80 wt% (Invention Product 2C), or 120 wt% (Invention Product 2D) to the bread weight.

[Test Example 2]

Ten panelists tried out each of the breads having novel physical properties acquired in Example 2 (Invention Products 2A to 2D) and Comparison Products 2A to 2C acquired for comparison in the following methods to perform sensory evaluation in the same manner as Test Example 1. The physical properties of some of Invention Products and Comparison Products were examined in the same manner as Example 1. The results are described in Table 2-1 and table 2-2.

Comparison Product 2A: Comparison Product 2A was produced in the same manner as Invention Product 1C except that the enzyme solution (A) of 20 wt% to the bread weight was brought into contact by injection.

Comparison Product 2B: Comparison Product 2B was produced in the same manner as Invention Product 1C except that the enzyme solution (A) of 140 wt% to the bread weight was brought into contact by injection.

Comparison Product 2C: Comparison Product 2C was produced in the same manner as Invention Product 1C except that the enzyme solution (A) of 160 wt% to the bread weight was brought into contact by injection.

[Table 2-1]

| Sensory evaluation | | | | | | | |
|---|---|---|---|---|---|---|---|
| | Invention Products | | | | Comparison Products | | |
| | 2A | 2B | 2C | 2D | 2A | 2B | 2C |
| Enzyme sol. [wt%] | 40 | 60 | 80 | 120 | 20 | 140 | 160 |
| Appearance | ○ | Δ | Δ | Δ | ○ | Δ | Δ |
| Flavor | Δ | Δ | Δ | Δ | Δ | Δ | Δ |
| Texture (inner phase) | Δ | Δ | Δ | Δ | Δ | × | × |
| MitMS (inner phase) | Δ | O | ○ | ○ | × | ◎ | ◎ |
| Texture (crust portion) | Δ | Δ | Δ | Δ | Δ | × | × |
| MitMS (crust portion) | Δ | ○ | ○ | ○ | × | ◎ | ◎ |
| MitMS: Melt-in-the-mouth sensation<br>Enzyme sol.: Enzyme solution | | | | | | | |

As described in Table 2-1, Invention Products 2A to 2D produced by treatment through contact with the enzyme solution (A) of 40 wt% or more and 120 wt% or less to the bread weight by injection had the inner phase and the crust portion exhibiting melt-in-the-mouth sensation equivalent to Invention Product 1C produced in Example 1 and were breads having novel physical properties exhibiting more preferable appearance.

On the other hand, the bread treated through contact with the enzyme solution (A) of 20 wt% or less to the bread weight by injection had poor melt-in-the-mouth sensation because the enzyme solution (A) did not entirely permeate the bread and generated a poorly digested portion (Comparison Product 2A). The bread brought into contact with the enzyme solution (A) of 140 wt% or more by injection had higher moisture content and texture different from normal bread and was hard to swallow due to tackiness or stickiness (Comparison Product 2B, Comparison Product 2C).

[Table 2-2]

| Physical property values | | | | |
|---|---|---|---|---|
| | Invention Products | | Comparison Products | |
| | 2A | 2D | 2A | 2B |
| Enzyme solution (A) [wt%] | 40 | 120 | 20 | 140 |
| Hardness [N/m$^2$] | 8340 | 6990 | 8970 | 6450 |
| Adhesiveness [J/m$^3$] | 18.9 | 25.5 | 13.4 | 42.3 |
| Cohesiveness | 0.634 | 0.603 | 0.653 | 0.6 |
| Syneresis rate [%] | 0.07 | 0.11 | 0.03 | 0.34 |
| Rate of water absorption [%] | 93.4 | 74.11 | 102.3 | 65.8 |

(continued)

| Physical property values | | | | |
|---|---|---|---|---|
| | Invention Products | | Comparison Products | |
| | 2A | 2D | 2A | 2B |
| Rate of saliva absorption [%] | 1.3 | 0.1 | 8.7 | 0.1 |
| Adhesiveness of bakery products moistened by saliva [J/m$^3$] | 53.8 | 57.4 | 63. 2 | 55.6 |
| Ad. bolus sw. ini [J/m$^3$] | 1440 | 1490 | 1450 | 1570 |
| Max. st. pen. [N/m$^2$] | 29800 | 18700 | 41500 | 16700 |
| MitMS: Melt-in-the-mouth sensation<br>Ad. bolus sw. ini.: Adhesiveness of the bolus at swallow initiation<br>Max. st. pen.: Maximum stress in penetration | | | | |

As described in Table 2-2, as was the case with Invention Product 1C, Invention Products 2A to 2D had hardness, cohesiveness, and a syneresis rate on the same level with normal bread. Since the adhesiveness was equal to or less than 50 J/m$^3$ and the adhesiveness of bakery products moistened by saliva and/or the adhesiveness of the bolus at swallow initiation were lower than normal bread, Invention Products 2A to 2D were the breads having novel physical properties hardly causing choking in the throat as compared to eating normal bread. Invention Products 2A to 2D also had lower maximum stress in penetration and had structure easily crushable by the tongue and the upper jaw.

Therefore, as was the case with Invention Product 1C, Invention Products 2A to 2D had physical properties making eating easier even for a person having impaired chewing or swallowing functions or an aged person etc., with a smaller amount of saliva.

EXAMPLE 3

Invention Products 3A to 3J were produced in the same producing method as Invention Product 1C except that the enzyme solution (A) or an enzyme solution (B) prepared as follows was injected and brought into contact with the bread (20 mm thick) acquired in the same way as 1) of Example 1, to 80 wt% to the bread weight.

Preparation of Enzyme Solution (A):

Papain W-40 (manufactured by Amano Enzyme) was dissolved into water to form a 0.025 wt%, 0.03 wt%, 0.05 wt%, 0.075 wt%, or 0.1 wt% aqueous solution as the enzyme solution (A) of each concentration.

Preparation of Enzyme Solution (B):

An enzyme preparation containing protease and peptidase, Protease P "Amano" 3G (manufactured by Amano Enzyme) was dissolved into water to form a 0.005 wt%, 0.01 wt%, 0.015 wt%, 0.025 wt%, or 0.03 wt% aqueous solution as the enzyme solution (B) of each concentration.

[Test Example 3]

Ten panelists tried out each of the breads having novel physical properties acquired in Example 3 (Invention Products 3A to 3J) to perform sensory evaluation in the same manner as Test Example 1 and the result is described in Table 3. The physical properties of each of Invention Products were examined in the same manner as Example 1.

[Table 3]

| Sensory evaluation | | | | | | | | | | |
|---|---|---|---|---|---|---|---|---|---|---|
| | Invention Products | | | | | | | | | |
| | 3A | 3B | 3C | 3D | 3E | 3F | 3G | 3H | 3I | 3J |
| Enzyme solution [%] | Enzyme solution (A) | | | | | Enzyme solution (B) | | | | |
| | 0.025 | 0.03 | 0.05 | 0.075 | 0.1 | 0.005 | 0.01 | 0.015 | 0.025 | 0.03 |

(continued)

| Sensory evaluation | | | | | | | | | | |
|---|---|---|---|---|---|---|---|---|---|---|
| | Invention Products | | | | | | | | | |
| | 3A | 3B | 3C | 3D | 3E | 3F | 3G | 3H | 3I | 3J |
| Appearance | Δ | Δ | Δ | Δ | Δ | Δ | Δ | Δ | Δ | Δ |
| Flavor | Δ | Δ | Δ | Δ | Δ | ◎ | ◎ | ○ | Δ | Δ |
| Tex. (in. ph.) | Δ | Δ | Δ | Δ | Δ | Δ | Δ | Δ | Δ | Δ |
| MitMS (in. ph.) | ○ | ○ | ○ | ○ | ○ | ○ | ○ | ○ | ○ | ○ |
| Texture (crust portion) | Δ | Δ | Δ | Δ | Δ | Δ | Δ | Δ | Δ | Δ |
| MitMS (crust portion) | ○ | ○ | ○ | ○ | ○ | ○ | ○ | ○ | ○ | ○ |
| Tex.: Texture<br>in. ph.: inner phase<br>MitMS: Melt-in-the-mouth sensation | | | | | | | | | | |

As described in Table 3, Invention Products 3A to 3J produced through contact with the enzyme solution (A) and the enzyme solution (B) of each concentration had the inner phase and the crust portion exhibiting melt-in-the-mouth sensation equivalent to Invention Product 1C produced in Example 1 or were breads having novel physical properties having more preferable flavor.

Particularly, the breads produced through contact with the enzyme solution (A) prepared to 0.025 wt% or more by injection were hardly cohesive in the oral cavity and collapsible in terms of the melt-in-the-mouth sensation. The breads produced through contact with the enzyme solution (B) prepared to 0.005 wt% or more and 0.015 wt% or less by injection were breads having more preferable novel physical properties closer to normal bread or exhibiting the same flavor as normal bread.

Describing the physical property values of Invention Product 3G as an example of the physical property values, Invention Product 3G had hardness of 7190 N/m$^2$, cohesiveness of 0.593, and a syneresis rate of 0.1 %, which are equivalent to normal bread. The Invention Product 3G had adhesiveness of 25.6 J/m$^3$, adhesiveness of bakery products moistened by saliva of 53.3 J/m$^3$, and adhesiveness of the bolus at swallow initiation of 1485 J/m$^3$, which are lower than normal bread. The Invention Product 3G also had a maximum stress in penetration of 17500 N/m$^2$, a rate of water absorption of 73.15 %, and a rate of saliva absorption of 0.1 %.

The other Invention Products had hardness of $1 \times 10^4$ N/m$^2$ or less, cohesiveness of 0.2 to 0.8, and a syneresis rate of 5 % or less, which are on the same level with normal bread, and had adhesiveness of 50 J/m$^3$ or less, and adhesiveness of bakery products moistened by saliva of 60 J/m$^3$ or less and/or adhesiveness of the bolus at swallow initiation of 1500 J/m$^3$ or less, which are lower than normal bread. The other Invention Products also had a maximum stress in penetration of $3.0 \times 10^4$ N/m$^2$ or less, a rate of water absorption of 100 % or less, and a rate of saliva absorption of 5 % or less.

Therefore, as was the case with Invention Product 1C etc., Invention Products 3A to 3J were bread hardly causing choking in the throat as compared to normal bread at the time of eating, having structure easily crushable by the tongue and the upper jaw, and having physical properties making eating easier even for a person having impaired chewing or swallowing functions or an aged person etc., with a smaller amount of saliva.

EXAMPLE 4

<Materials>

1) Thickening Polysaccharides

(1) Sodium Alginate Gel

One (1) gram of sodium alginate (I-1 manufactured by Kimica) and 0.3 g of dibasic calcium phosphate (food additive grade, manufactured by Wako Pure Chemical Industries) were put into a container containing 90 g of water while stirring.

After a solution acquired by dissolving 0.9 g of glucono delta lactone (Fujiglucon manufactured by Fuso Chemical) into 7.8 g of water was also added and stirred, the mixture was left to stand to acquire sodium alginate gel with a thickening polysaccharide concentration of 1 wt%.

(2) Glucomannan Gel

In a container containing 95.945 g of water, 1 g or 2 g of glucomannan fine powder (Leorex RS manufactured by Shimizu Chemical Corporation) was dispersed and homogenized. This mixture was left to stand for two hours for swelling without drying. A solution acquired by dispersing 0.055 g of calcium hydroxide (food additive grade, manufactured by Wako Pure Chemical Industries) in 2 g of water was further mixed.

This mixture was heated by a steam convection oven (SelfCooking Center 61 manufactured by RATIONAL) at a humidity of 100 % and an inside temperature of 100 °C for 15 minutes. The mixture was cooled in a water bath to acquire glucomannan gel with a thickening polysaccharide concentration of 1 wt% or 2 wt%.

(3) Glucomannan Sol

In a container containing 98 g of water, 2 g of glucomannan fine powder (Leorex RS manufactured by Shimizu Chemical Corporation) was dispersed and homogenized. This mixture was left to stand for two hours for swelling without drying to acquire glucomannan sol with a thickening polysaccharide concentration of 2 wt%.

(4) Native-Type Gellan Gum Gel

One (1) gram of native-type gellan gum (Kelcogel HM manufactured by San-Ei Gen F.F.I.) and 0.1 g of calcium lactate were put into a container containing 98.9 g of water while stirring and heated in a 90 °C water bath. The mixture was cooled in a water bath to acquire native-type gellan gum gel with a thickening polysaccharide concentration of 1 wt%.

2) Bread

One hundred seventy five (175) grams of strong flour, 10.5 g of vegetable oil and fat, 21 g of white soft sugar, 3.9 g of salt, 10.5 g of skim milk, 96.25 g of water, 2.1 g of dry yeast, and 48.13 g of any one of the sodium alginate gel, the glucomannan gel, and the native-type gellan gum gel (all 1-cm square dice) or the glucomannan sol of 1) described above were combined and put into a dedicated container of a household bread-baking machine (Home Bakery (SD-BMS101) manufactured by Panasonic), and bread was produced with an accompanying hook, by baking in a Basic Bread Standard Baked Color Mode. After cooling, the bread was sliced into a thickness of 20 mm. The solated thickening polysaccharide or gelled thickening polysaccharide contained in the acquired bread was 27.5 % (baker's %) in each case.

3) Enzyme Solutions

Protease P "Amano" 3G (an enzyme preparation containing protease and peptidase, manufactured by Amano Enzyme) was dissolved into water to form a 0.01 wt% aqueous solution, which was used as the enzyme solution (B).

<Producing Method>

Invention Products 4A to 4D were produced in the same manner as Invention Product 1C except that the enzyme solution was injected to 80 wt% to the bread weight and brought into contact with the bread (20 mm thick) of 2) above blended with the sodium alginate gel (thickening polysaccharide concentration: 1 wt%), the glucomannan gel (thickening polysaccharide concentration: 2 wt%), the glucomannan sol (thickening polysaccharide concentration: 2 wt%), or the native-type gellan gum gel (thickening polysaccharide concentration: 1 wt%) prepared in 1) above.

[Test Example 4]

Ten panelists tried out each of the breads having novel physical properties acquired in Example 4 (Invention Products 4A to 4D) to perform sensory evaluation in the same manner as Test Example 1. The physical properties of each of Invention Products were examined in the same manner as Example 1. The results are described in Table 4.

[Table 4]

| | | Invention Products | | | |
|---|---|---|---|---|---|
| | | 4 A | 4 B | 4 C | 4 D |
| Type of thickening polysaccharide | | Sodium alginate gel | Glucoman. gel | Glucoman. sol | Native-type gellan gum gel |
| Sensory evaluation | Appearance | ◯ | ◯ | ◯ | ◯ |
| | Flavor | ◎ | ◎ | ◎ | ◎ |
| | Texture (inner phase) | ◯ | ◎ | ◎ | ◯ |
| | MitMS (inner phase) | ◯ | ◯ | ◯ | ◯ |
| | Texture (crust portion) | ◯ | ◎ | ◎ | ◯ |
| | MitMS (crust portion) | ◯ | ◯ | ◯ | ◯ |
| | Overall | ◯ | ◯ | ◯ | ◯ |
| Physical property values | Hardness [N/m²] | 6940 | 7530 | 7360 | 7130 |
| | Adhesiveness [J/m³] | 23.5 | 22.3 | 26.8 | 24.3 |
| | Cohesiveness | 0.689 | 0.623 | 0.69 | 0.674 |
| | Syneresis rate [%] | 0.08 | 0.08 | 0.08 | 0.09 |
| | Rate of water abs. [%] | 74.34 | 73.25 | 72.44 | 75.12 |
| | Rate of saliva abs. [%] | 0.1 | 0.1 | 0.1 | 0.1 |
| | Adhesiveness of bakery products moistened by saliva [J/m³] | 26.1 | 25.6 | 28.9 | 26.8 |
| | Adhesiveness of the bolus at swallow initiation [J/m³] | 1480 | 1230 | 1490 | 1370 |
| | Max. st. pen. [N/m²] | 19300 | 18600 | 18100 | 18800 |

MitMS: Melt-in-the-mouth sensation
abs.: absorption
Max. st. pen.: Maximum stress in penetration
Glucoman.: Glucomannan

As described in Table 4, each of Invention Products 4A to 4D acquired by treating the bread blended with the sodium alginate gel, the glucomannan gel, the glucomannan sol, or the native-type gellan gum gel through contact with injected enzyme was bread having novel physical properties having appearance, flavor, and texture close or equivalent to normal bread.

The Invention Products 4A to 4D had hardness, cohesiveness, and a syneresis rate on the same level with normal bread (hardness of $1 \times 10^4$ N/m² or less, cohesiveness of 0.2 to 0.8, and a syneresis rate of 5 % or less), had adhesiveness of 50 J/m³ or less, and had adhesiveness of bakery products moistened by saliva and/or adhesiveness of the bolus at swallow initiation lower than normal bread (adhesiveness of bakery products moistened by saliva of 60 J/m³ or less; adhesiveness of the bolus at swallow initiation of 1500 J/m³ or less). The Invention Products 4A to 4D also had a maximum stress in penetration of $3.0 \times 10^4$ N/m² or less, a rate of water absorption of 100 % or less, and a rate of saliva absorption of 5 % or less.

Therefore, as was the case with Invention Product 1C etc., Invention Products 4A to 4D had the inner phase and the crust portion hardly causing choking in the throat as compared to normal bread at the time of eating, having structure easily crushable by the tongue and the upper jaw, and having physical properties making eating easier even for a person having impaired chewing or swallowing functions or an aged person with a smaller amount of saliva.

EXAMPLE 5

Invention Products 5A to 5H were produced by rebaking after treatment through contact with the enzyme by injection in the same manner as Invention Product 4B except using bread produced by combining strong flour, vegetable oil and fat, white soft sugar, salt, skim milk, dry yeast, glucomannan gel (thickening polysaccharide concentration: 1 wt% or 2 wt%) prepared in the same way as 1) (2) of Example 4, and water to achieve a composition described in Table 5-1. The Invention Product 5A is produced with the same composition as Invention Product 4B.

The thickening polysaccharide concentration of the glucomannan gel and the blending amount (baker's %) of the gelled thickening polysaccharide are also described in Table 5-1.

[Table 5-1]

| Composition [g] | Invention products | | | | | | | |
|---|---|---|---|---|---|---|---|---|
| | 5A | 5B | 5C | 5D | 5E | 5F | 5G | 5H |
| Strong flour | 175 | | | | | | | |
| Vegetable oil and fat | 10.5 | | | | | | | |
| White soft sugar | 21 | | | | | | | |
| Salt | 3.9 | | | | | | | |
| Skim milk | 10. 5 | | | | | | | |
| Dry yeast | 2.1 | | | | | | | |
| Glucomannan gel | 48.13 | 72.20 | 96.30 | 96.30 | 105.90 | 115.50 | 48.13 | 96.25 |
| Water | 96.25 | 96.25 | 96.25 | 84.42 | 74.80 | 65. 17 | 96.25 | 96.25 |
| Total amount | 367.4 | 391. 5 | 415.6 | 403.8 | 403.7 | 403.7 | 367.4 | 415.5 |
| Th. PoSa conc. [%] | 2 | 2 | 2 | 2 | 2 | 2 | 1 | 1 |
| Gelled thickening polysaccharide amount [baker's %]* | 27.5 | 41.3 | 55 | 55 | 60.5 | 66 | 27.5 | 55 |
| * Gelled thickening polysaccharide amount [baker's %] = gel weight [g]/strong flour weight [g] $\times$ 100 Th. PoSa conc.: Thickening polysaccharide concentration | | | | | | | | |

[Test Example 5]

Ten panelists tried out each of the breads having novel physical properties acquired in Example 5 (Invention Products 5A to 5H) to perform sensory evaluation in the same manner as Test Example 1 and the results are described in Table 5-2. The physical properties of each of Invention Products were examined in the same manner as Example 1.

[Table 5-2]

| | Invention Products | | | | | | | |
|---|---|---|---|---|---|---|---|---|
| | 5A | 5B | 5C | 5D | 5E | 5F | 5G | 5H |
| Appearance | c | ○ | ○ | ○ | ○ | ○ | ○ | ○ |
| Flavor | ◎ | ◎ | ◎ | ◎ | ◎ | ◎ | ◎ | ◎ |
| Texture (inner phase) | ◎ | ◎ | ◎ | ◎ | ○ | ○ | ○ | ○ |
| MitMS (inner phase) | ○ | ○ | ○ | ○ | Δ | Δ | ○ | ○ |
| Texture (crust portion) | ◎ | ◎ | ◎ | ◎ | ○ | ○ | ○ | ○ |
| MitMS (crust portion) | ○ | ○ | ○ | ○ | Δ | Δ | ○ | ○ |
| Overall evaluation | ○ | ○ | ○ | ○ | ○ | v | ○ | ○ |
| MitMS: Melt-in-the-mouth sensation | | | | | | | | |

As described in Table 5-2, Invention Products 5A to 5H acquired by the enzyme treatment of the bread blended with the glucomannan gel having the thickening polysaccharide concentration of 1 % or more so that the gelled thickening polysaccharide amounted to about 27.5 to 66 % (baker's %) were bread having novel physical properties having appearance, flavor, and texture equivalent to normal bread as was the case with Invention Product 4B etc.

Describing the physical property values of Invention Product 5D as an example of the physical property values, Invention Product 5D had hardness of 8032 N/m$^2$, cohesiveness of 0.6, and a syneresis rate of 0.11 %, which are on the same level with normal bread. The Invention Product 5D had adhesiveness of 20.5 J/m$^3$, adhesiveness of bakery products moistened by saliva of 22.8 J/m$^3$, and adhesiveness of the bolus at swallow initiation of 998.9 J/m$^3$, which are lower than normal bread. The Invention Product 5D also had a maximum stress in penetration of 20500 N/m$^2$, a rate of water absorption of 75.5 %, and a rate of saliva absorption of 0.1 %.

The other Invention Products had hardness of $1\times10^4$ N/m$^2$ or less, cohesiveness of 0.2 to 0.8, and a syneresis rate of 5 % or less, which are on the same level with normal bread, and had adhesiveness of 50 J/m$^3$ or less, and adhesiveness of bakery products moistened by saliva of 60 J/m$^3$ or less and/or adhesiveness of the bolus at swallow initiation of 1500 J/m$^3$ or less, which are lower than normal bread. The other Invention Products also had a maximum stress in penetration of $3.0\times10^4$ N/m$^2$ or less, a rate of water absorption of 100 % or less, and a rate of saliva absorption of 5 % or less.

Therefore, as was the case with Invention Product 1C etc., all Invention Products 5A to 5H had the inner phase and the crust portion hardly causing choking in the throat as compared to normal bread at the time of eating, having structure easily crushable by the tongue and the upper jaw, and having physical properties making eating easier even for a person having impaired chewing or swallowing functions or an aged person with a smaller amount of saliva.

EXAMPLE 6

<Materials>

1) Starch

Processed starch (Matsunorin P7 manufactured by Matsutani Chemical Industry) was used.

2) Bread

The bread used was produced by combining strong flour, vegetable oil and fat, white soft sugar, salt, skim milk, dry yeast, glucomannan gel prepared in the same way as 1) (2) of Example 4, the processed starch of 1) described above, and water to achieve a composition described in Table 6-1. The amount (baker's %) of the processed starch blended in the bread is also described in Table 6-1.

<Producing Method>

Invention Products 6A to 6F were produced by rebaking after treatment through contact with the enzyme by injection in the same manner as Invention Product 5D except using the bread produced as described above.

[Table 6-1]

| Composition [g] | Invention products | | | | | |
|---|---|---|---|---|---|---|
| | 6A | 6B | 6C | 6D | 6E | 6F |
| Strong flour | 175 | | | | | |
| Vegetable oil and fat | 10.5 | | | | | |
| White soft sugar | 21 | | | | | |
| Salt | 3.9 | | | | | |
| Skim milk | 10.5 | | | | | |
| Dry yeast | 2.1 | | | | | |
| Glucomannan gel | 96. 3 | | | | | |
| Processed starch | 0.88 | 1.26 | 1.75 | 2.50 | 4.38 | 8.75 |
| Water | 84.4 | | | | | |
| Total amount | 404.6 | 405.0 | 405.5 | 406.2 | 408. 1 | 412.5 |

(continued)

| Composition [g] | Invention products | | | | | |
|---|---|---|---|---|---|---|
| | 6A | 6B | 6C | 6D | 6E | 6F |
| Processed starch amount [baker's %]* | 0.5 | 0.72 | 1 | 1.43 | 2.5 | 5 |
| * Processed starch amount [baker's %] = processed starch weight [g]/strong flour weight [g] $\times$ 100 | | | | | | |

[Test Example 6]

Ten panelists tried out each of the breads having novel physical properties acquired in Example 6 (Invention Products 6A to 6F) to perform sensory evaluation in the same manner as Test Example 1 and the results are described in Table 6-2. The physical properties of each of Invention Products were examined in the same manner as Example 1.

[Table 6-2]

| | Invention Products | | | | | |
|---|---|---|---|---|---|---|
| | 6A | 6B | 6C | 6D | 6E | 6F |
| Appearance | ◎ | ◎ | ◎ | ◎ | ◎ | ◎ |
| Flavor | ◎ | ◎ | ◎ | ◎ | ◎ | ◎ |
| Texture (inner phase) | ◎ | ◎ | ◎ | ◎ | ◎ | ◎ |
| MitMS (inner phase) | ◎ | ◎ | ◎ | ◎ | ◎ | ◎ |
| Texture (crust portion) | ◎ | ◎ | ◎ | ◎ | ◎ | ◎ |
| MitMS (crust portion) | ○ | ○ | ○ | ○ | ○ | ○ |
| Overall evaluation | ◎ | ◎ | ◎ | ◎ | ◎ | ◎ |
| MitMS: Melt-in-the-mouth sensation | | | | | | |

As described in Table 6-2, Invention Products 6A to 6F acquired by the enzyme treatment of the bread blended with the processed starch amount (baker's %) of 0.5 to 5 % were bread having appearance, flavor, and texture equivalent to normal bread, exhibiting melt-in-the-mouth sensation causing complete melt in the mouth, and having novel physical properties.

Describing the physical property values of Invention Product 6A as an example of the physical property values, Invention Product 6A had hardness of 7432 N/m$^2$, cohesiveness of 0.619, and a syneresis rate of 0.18 %, which are on the same level with normal bread. The Invention Product 6A had adhesiveness of 21.6 J/m$^3$, adhesiveness of bakery products moistened by saliva of 23.1 J/m$^3$, and adhesiveness of the bolus at swallow initiation of 1067.2 J/m$^3$, which are lower than normal bread. The Invention Product 6A also had a maximum stress in penetration of 19400 N/m$^2$, a rate of water absorption of 76.72 %, and a rate of saliva absorption of 0.1 %.

The other Invention Products had hardness of $1 \times 10^4$ N/m$^2$ or less, cohesiveness of 0.2 to 0.8, and a syneresis rate of 5 % or less, which are on the same level with normal bread, and had adhesiveness of 50 J/m$^3$ or less, and adhesiveness of bakery products moistened by saliva of 60 J/m$^3$ or less, and/or adhesiveness of the bolus at swallow initiation of 1500 J/m$^3$ or less, which are lower than normal bread. The other Invention Products also had a maximum stress in penetration of $3.0 \times 10^4$ N/m$^2$ or less, a rate of water absorption of 100 % or less, and a rate of saliva absorption of 5 % or less.

Therefore, all Invention Products 6A to 6F had the inner phase and the crust portion having appearance, flavor, and texture equivalent to normal bread, hardly causing choking in the throat as compared to normal bread at the time of eating, having structure easily crushable by the tongue and the upper jaw, and having physical properties making eating easier even for a person having impaired chewing or swallowing functions or an aged person with a smaller amount of saliva.

EXAMPLE 7

Invention Products 7A to 7E were produced in the same producing method as Invention Product 6A except that the enzyme solution (B) prepared in the same way as 3) of Example 4 was brought into contact with the bread (20 mm thick) acquired in the same way as 2) of Example 6 by immersion to 100 wt% (Invention Product 7A), 120 wt% (Invention Product 7B), 170 wt% (Invention Product 7C), 230 wt% (Invention Product 7D), or 350 wt% (Invention Product 7E) to the bread weight.

[Test Example 7]

Ten panelists tried out each of the breads having novel physical properties acquired in Example 7 (Invention Products 7A to 7E) to perform sensory evaluation in the same manner as Test Example 1 and the results are described in Table 7-1. The physical properties of each of Invention Products were examined in the same manner as Example 1.

[Table 7-1]

| Sensory evaluation | | | | | |
|---|---|---|---|---|---|
| | Invention Products | | | | |
| | 7A | 7B | 7C | 7D | 7E |
| Appearance | ◎ | ◎ | ◎ | ◎ | ◎ |
| Flavor | ◎ | ◎ | ◎ | ◎ | ◎ |
| Texture (inner phase) | ◎ | ◎ | ◎ | ◎ | ◎ |
| MitMS (inner phase) | ◎ | ◎ | ◎ | ◎ | ◎ |
| Texture (crust portion) | ◎ | ◎ | ◎ | ◎ | ◎ |
| MitMS (crust portion) | ◎ | ◎ | ◎ | ◎ | ◎ |
| Overall evaluation | ◎ | ◎ | ◎ | ◎ | ◎ |
| MitMS: Melt-in-the-mouth sensation | | | | | |

As described in Table 7-1, Invention Products 7A to 7E produced by treatment through contact by immersion with the enzyme solution (B) of 100 wt% or more and 350 wt% or less to bread weight were bread having appearance, flavor, and texture equivalent to normal bread, exhibiting melt-in-the-mouth sensation causing complete melt in the mouth, and having novel physical properties.

Describing the physical property values of Invention Product 7C as an example of the physical property values, Invention Product 7C had hardness of 6812 N/m$^2$, cohesiveness of 0.585, and a syneresis rate of 0.11 %, which are on the same level with normal bread. The Invention Product 7A had adhesiveness of 4.9 J/m$^3$, adhesiveness of bakery products moistened by saliva of 2.7 J/m$^3$, and adhesiveness of the bolus at swallow initiation of 1032.6 J/m$^3$, which are lower than normal bread. The Invention Product 7A also had a maximum stress in penetration of 16500 N/m$^2$, a rate of water absorption of 65.81 %, and a rate of saliva absorption of 0.1 %.

The other Invention Products had hardness of $1 \times 10^4$ N/m$^2$ or less, cohesiveness of 0.2 to 0.8, and a syneresis rate of 5 % or less, which are on the same level with normal bread, and had adhesiveness of 50 J/m$^3$ or less, and adhesiveness of bakery products moistened by saliva of 60 J/m$^3$ or less and/or adhesiveness of the bolus at swallow initiation of 1500 J/m$^3$ or less, which are lower than normal bread. The other Invention Products also had a maximum stress in penetration of $3.0 \times 10^4$ N/m$^2$ or less, a rate of water absorption of 100 % or less, and a rate of saliva absorption of 5 % or less.

Therefore, all Invention Products 7A to 7E had appearance, flavor, and texture equivalent to normal bread, exhibiting melt-in-the-mouth sensation causing complete melt in the mouth in the inner phase and the crust portion, and having novel physical properties. As compared to those prepared in the same manner as Invention Products 6A to 6F of Example 6, Invention Products 7A to 7E had smaller adhesiveness of bakery products moistened by saliva and are improved in terms of the easiness of adhesion in the oral cavity.

As described above, all Invention Products 7A to 7E were bread hardly causing choking in the throat as compared to normal bread at the time of eating, having structure easily crushable by the tongue and the upper jaw, and having physical properties making eating easier even for a person having impaired chewing or swallowing functions or an aged person with a smaller amount of saliva.

INDUSTRIAL APPLICABILITY

The present invention facilitates production of breads having the following novel physical properties of 1) to 3) and structure easily crushable by the tongue and the upper jaw:

1) hardness, cohesiveness, and a syneresis rate on the same level with normal bread;
2) adhesiveness equal to or less than 50 J/m$^3$; and
3) adhesiveness of bakery products moistened by saliva and/or adhesiveness of the bolus at swallow initiation lower than normal bread.

The breads acquired with the present invention can be provided to wider generations as breads having novel physical properties and can directly be utilized as care food etc.

## Claims

**1.**  A method of producing a rebaked bread having the following physical properties of 1) to 3) and a structure easily crushable by the tongue and the upper jaw:

1)

- a hardness equal to or less than $1 \times 10^4$ N/m$^2$ as measured by Creep Meter RE2-33005B (manufactured by YAMADEN), and
- a cohesiveness within a range of 0.2 to 0.8 as measured by Creep Meter RE2-33005B (manufactured by YAMADEN), wherein the hardness and cohesiveness are measured according to the method described in the description; and
- a syneresis rate equal to or less than 5 % as measured by Creep Meter RE2-33005B (manufactured by YAMADEN) according to the method described in the description;

2) an adhesiveness equal to or less than 50 J/m$^3$ as measured by Creep Meter RE2-33005B (manufactured by YAMADEN) according to the method described in the description; and
3)

- an adhesiveness of bakery products moistened by saliva equal to or less than 60 J/m$^3$ as measured by Creep Meter RE2-33005B (manufactured by YAMADEN) according to the method described in the description; and/or
- an adhesiveness of the bolus at swallow initiation equal to or less than 1500 J/m$^3$ as measured by Creep Meter RE2-33005B (manufactured by YAMADEN) according to the method described in the description; the method comprising the steps of acquiring bread by fermenting and baking bread dough, performing an enzyme treatment of the bread, and rebaking the bread after the enzyme treatment;

wherein the enzyme is an enzyme having activity of one or more types of protease activity or peptidase activity; and
wherein the step of performing the enzyme treatment of bread is done by bringing an enzyme solution which is water containing an enzyme into uniform contact with the tissues of the bread by immersion or injection and allowing a reaction to occur for a certain time under the condition causing an enzyme reaction.

**2.**  The method of producing a rebaked bread according to claim 1, wherein the bread is subjected to the enzyme treatment by injection bringing an enzyme solution which is water containing an enzyme of 40 wt% to 120 wt% to bread weight into uniform contact with the bread.

**3.**  The method of producing a rebaked bread according to claim 1, wherein the bread is subjected to the enzyme treatment by immersion bringing an enzyme solution which is water containing an enzyme of 100 wt% to 350 wt% to bread weight into uniform contact with the bread.

**4.**  The method of producing a rebaked bread according to claim 2 or 3, wherein the bread subjected to the enzyme treatment is bread blended with gelled thickening polysaccharide or solated thickening polysaccharide having concentration of 1 wt% or more and wherein blending amount of the gelled thickening polysaccharide or the solated thickening polysaccharide is equal to or less than 70 % when flour in bakery dough is assumed to be 100 wt%.

**5.**  The method of producing a rebaked bread according to claim 4, wherein the bread subjected to the enzyme treatment is bread blended with starch.

6. The method of producing a rebaked bread according to claim 5, wherein blending amount of the starch is equal to or greater than 0.5 % when flour in bakery dough is assumed to be 100 wt%.

## Patentansprüche

1. Verfahren zur Herstellung eines zum zweiten oder wiederholten Mal gebackenen (rebaked) Brotes mit den folgenden physikalischen Eigenschaften von 1) bis 3) und einer Struktur, die mit Hilfe der Zunge und des Oberkiefers leicht zerquetschbar ist:

   1)

       - eine Härte, die gleich oder kleiner als $1 \times 10^4$ N / m² ist, gemessen mit Hilfe eines Creep Meter, Modell RE2-33005B (hergestellt von YAMADEN) und
       - eine Kohäsion im Bereich von 0,2 bis 0,8, gemessen mit Hilfe eines Creep Meter, Modell RE2-33005B (hergestellt von YAMADEN),

       wobei die Härte und Kohäsion gemäß dem in der Beschreibung beschriebenen Verfahren gemessen werden; und

       - eine Synäresegeschwindigkeit, die gleich oder kleiner als 5% ist, gemessen mit Hilfe eines Creep Meter, Modell RE2-33005B (hergestellt von YAMADEN) gemäß dem in der Beschreibung beschriebenen Verfahren;

   2)

       - eine Haftfähigkeit, die gleich oder kleiner als 50 J / m³ ist, gemessen mit Hilfe eines Creep Meter, Modell RE2-33005B (hergestellt von YAMADEN), gemäß dem in der Beschreibung beschriebenen Verfahren; und

   3)

       - eine Haftfähigkeit der Backwaren, welche mit Speichel befeuchtet worden sind, die gleich oder kleiner als 60 J / m³ ist, gemessen mit Hilfe eines Creep Meter, Modell RE2-33005B (hergestellt von YAMADEN), gemäß dem in der Beschreibung beschriebenen Verfahren; und / oder
       - eine Haftfähigkeit des Bolus bei Beginn des Schluckvorgangs, die gleich oder kleiner als 1500 J / m³ ist, gemessen mit Hilfe eines Creep Meter, Modell RE2-33005B (hergestellt von YAMADEN), gemäß dem in der Beschreibung beschriebenen Verfahren;

   wobei das Verfahren die Schritte des Erhaltens von Brot durch Fermentieren und Backen von Brotteig, Durchführen einer Enzymbehandlung des Brotes und erneutes Backen des Brotes nach der Enzymbehandlung umfasst;
   wobei das Enzym ein Enzym ist, welches eine Aktivität von einer oder mehreren Arten von Proteaseaktivität oder Peptidaseaktivität aufweist; und
   wobei der Schritt des Durchführens der Enzymbehandlung von Brot erfolgt, indem eine Enzymlösung, die aus Wasser, welches das Enzym enthält, besteht, mit Hilfe von Eintauchen oder Injizieren in einen gleichmäßigen Kontakt mit den Geweben des Brotes gebracht wird und für eine gewisse Zeit unter der Bedingung, die eine Enzymreaktion bewirkt, reagieren gelassen wird.

2. Das Verfahren zur Herstellung eines zum zweiten oder wiederholten Mal gebackenen Brotes nach Anspruch 1, wobei das Brot der Enzymbehandlung unterworfen wird, indem man eine Enzymlösung, die aus Wasser, welches ein Enzym enthält, besteht, mit 40 Gew.-% bis 120 Gew.-%, bezogen auf das Brotgewicht, durch Injizieren in einen gleichmäßigen Kontakt mit dem Brot bringt.

3. Das Verfahren zur Herstellung eines zum zweiten oder wiederholten Mal gebackenen Brotes nach Anspruch 1, wobei das Brot der Enzymbehandlung unterworfen wird, indem man eine Enzymlösung, die aus Wasser, welches ein Enzym enthält, besteht, mit 100 Gew.-% bis 350 Gew.-%, bezogen auf das Brotgewicht, durch Eintauchen in einen gleichmäßigen Kontakt mit dem Brot bringt.

4. Das Verfahren zur Herstellung eines zum zweiten oder wiederholten Mal gebackenen Brotes nach Anspruch 2 oder 3, wobei das Brot, welches der Enzymbehandlung unterzogen wird, Brot ist, das mit einem gelierten verdickenden Polysaccharid oder einem gelösten verdickenden Polysaccharid, welches eine Konzentration von 1 Gew.-% oder mehr aufweist, vermischt worden ist und wobei die Menge des gelierten verdickenden Polysaccharids oder des gelösten verdickenden Polysaccharids, die hinein gemischt worden ist, gleich oder weniger als 70 % beträgt, wenn für das im Backteig enthaltene Mehl angenommen wird, das es 100 Gew.-% hat.

5. Das Verfahren zur Herstellung eines zum zweiten oder wiederholten Mal gebackenen Brotes nach Anspruch 4, wobei das Brot, welches der Enzymbehandlung unterworfen wird, Brot ist, das mit Stärke vermischt worden ist.

6. Das Verfahren zur Herstellung eines zum zweiten oder wiederholten Mal gebackenen Brotes nach Anspruch 5, wobei die Menge der Stärke, die hinein gemischt worden ist, gleich oder mehr als 0,5 % beträgt, wenn für das im Backteig enthaltene Mehl angenommen wird, das es 100 Gew.-% hat.

**Revendications**

1. Procédé de production de pain recuit ayant les propriétés physiques 1) à 3) suivantes et une structure facilement écrasable par la langue et la mâchoire supérieure :

    1)

        - une dureté, mesurée par le compteur de fluage RE2-33005B (de marque YAMADEN), égale ou inférieure à $1 \times 10^4$ N/m$^2$, et
        - une cohésivité, mesurée par le compteur de fluage RE2-33005B (de marque YAMADEN), dans la plage de 0,2 à 0,8,

    dans lequel la dureté et la cohésivité sont mesurées selon le procédé décrit dans la description ; et

        - un taux de synérèse, mesuré par le compteur de fluage RE2-33005B (de marque YAMADEN) selon le procédé décrit dans la description, égal ou inférieur à 5 % ;

    2) une adhésivité, mesurée par le compteur de fluage RE2-33005B (de marque YAMADEN) selon le procédé décrit dans la description, égale ou inférieure à 50 J/m$^3$ ; et
    3)

        - une adhésivité des produits de boulangerie humidifiés par la salive, mesurée par le compteur de fluage RE2-33005B (de marque YAMADEN) selon le procédé décrit dans la description, égale ou inférieure à 60 J/m$^3$ ; et/ou
        - une adhésivité du bolus au début de la déglutition, mesurée par le compteur de fluage RE2-33005B (de marque YAMADEN) selon le procédé décrit dans la description, égale ou inférieure à 1500 J/m$^3$ ;

    le procédé comprenant les étapes consistant à acquérir le pain par fermentation et cuisson d'une pâte à pain, à mettre en oeuvre un traitement enzymatique du pain, et à recuire le pain après le traitement enzymatique ; dans lequel l'enzyme est une enzyme ayant une activité d'un ou de plusieurs types parmi une activité protéase ou une activité peptidase ; et dans lequel l'étape de mise en oeuvre du traitement enzymatique du pain s'opère en amenant une solution enzymatique qui est constituée d'eau contenant une enzyme en contact uniforme avec les tissus du pain par immersion ou par injection et en laissant la réaction se produire pendant un certain temps dans une condition apte à la réaction de l'enzyme.

2. Procédé de production de pain recuit selon la revendication 1, dans lequel le pain est soumis au traitement enzymatique en amenant par injection une solution enzymatique qui est constituée d'eau contenant une enzyme représentant de 40 à 120 % en poids du pain en contact uniforme avec le pain.

3. Procédé de production de pain recuit selon la revendication 1, dans lequel le pain est soumis au traitement enzymatique en amenant par immersion une solution enzymatique qui est constituée d'eau contenant une enzyme représentant de 100 à 350 % en poids du pain en contact uniforme avec le pain.

4. Procédé de production de pain recuit selon la revendication 2 ou 3, dans lequel le pain soumis au traitement enzymatique est un pain mélangé à un polysaccharide épaississant gélifié ou à un polysaccharide épaississant gélatinisé ayant une concentration de 1 % en poids ou plus et dans lequel la quantité de polysaccharide épaississant gélifié ou de polysaccharide épaississant gélatinisé incorporée par mélange est égale ou inférieure à 70 % quand la farine dans la pâte à boulanger est de 100 % en poids.

5. Procédé de production de pain recuit selon la revendication 4, dans lequel le pain soumis au traitement enzymatique est un pain mélangé à de l'amidon.

6. Procédé de production de pain recuit selon la revendication 5, dans lequel la quantité d'amidon incorporée par mélange est égale ou supérieure à 0,5 % quand la farine dans la pâte à boulanger est de 100 % en poids.

[FIG.1]

Invention
product
1C

After enzyme
treatment and
rebaking

After enzyme
treatment and
rebaking

After enzyme
treatment and
rebaking (inner
phase enlarged)

Comparison
products

1A
(before enzyme injection)

1C

1F

1D (whole)

1D

1D
(inner phase enlarged)

1G

1H

[FIG.2]

Invention product 4A

After enzyme treatment and rebaking

After enzyme treatment and rebaking (inner phase enlarged)

Invention product 4B

Before enzyme treatment

After enzyme treatment and rebaking

After enzyme treatment and rebaking (inner phase enlarged)

Invention product 4C

Before enzyme treatment

After enzyme treatment and rebaking

After enzyme treatment and rebaking (inner phase enlarged)

[FIG.3]

Invention product 5A
Before enzyme treatment
After enzyme treatment and rebaking
After enzyme treatment and rebaking (inner phase enlarged)

Invention product 5D
Before enzyme treatment
After enzyme treatment and rebaking

Invention product 5H
Before enzyme treatment
After enzyme treatment and rebaking
After enzyme treatment and rebaking (inner phase enlarged)

[FIG.4]

Invention product 6A

Before enzyme treatment

Before enzyme treatment (inner phase enlarged)

After enzyme treatment and rebaking

Invention product 6F

Before enzyme treatment

Before enzyme treatment (inner phase enlarged)

After enzyme treatment and rebaking

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3639801 B
- JP 3683834 B
- JP 3534401 B
- JP 2010161998 A
- JP 2009219364 A
- JP 4459107 B
- JP 4535927 B
- WO 2009044538 A1
- JP 2010207128 A
- JP 2007021839 A
- WO RE233005 B

**Non-patent literature cited in the description**

- *Jpn. J. Oral Biol.,* 2003, vol. 45, 569-63